# EUROPÄISCHE PATENTSCHRIFT

(11) **EP 4 013 982 B1**
(45) Veröffentlichungstag und Bekanntmachung des Hinweises auf die Patenterteilung: **29.07.2026**
(21) Anmeldenummer: 20757322.1
(22) Anmeldetag: 14.08.2020
(51) Int. Cl.: F02M 59/44, F04B 1/0448, F04B 53/02, F16J 15/3208, F16J 15/3212, F16J 15/3216, F16J 15/322, F16J 15/3232, F16J 15/328, F16J 15/3276, F16J 15/3252, F04B 53/14

(54) **DICHTUNGSANORDNUNG, HOCHDRUCKPUMPE UND VERFAHREN ZUR HERSTELLUNG EINER DICHTUNGSANORDNUNG**
SEALING ARRANGEMENT, HIGH-PRESSURE PUMP AND METHOD FOR PRODUCING A SEALING ARRANGEMENT
ENSEMBLE D'ÉTANCHÉITÉ, POMPE HAUTE PRESSION ET PROCÉDÉ DE FABRICATION D'UN ENSEMBLE D'ÉTANCHÉITÉ

(30) Priorität: 15.08.2019 DE 102019212262
(43) Veröffentlichungstag der Anmeldung: 22.06.2022
(73) Patentinhaber: ElringKlinger AG, 72581 Dettingen (DE); Elringklinger Kunststofftechnik GmbH, 74321 Bietigheim-Bissingen (DE)
(72) Erfinder: ALBER, Markus, 71711 Steinheim (DE); KOPP, Fabian, 71732 Tamm (DE); MAIER, Martin, 74379 Ingersheim (DE); HOCKER, Klaus, 74379 Ingersheim (DE)
(74) Vertreter: DTS Patent- und Rechtsanwälte PartmbB
(86) Internationale Anmeldenummer: PCT/EP2020/072903
(87) Internationale Veröffentlichungsnummer: WO 2021/028580

(56) Entgegenhaltungen:
- WO-A1-2016/096516
- DE-A1- 102016 205 057
- DE-A1- 102017 110 115
- DE-A1- 102017 211 353
- US-A1- 2007 057 472

## Beschreibung

Die vorliegende Erfindung betrifft eine Dichtungsanordnung zur Abdichtung zwischen zwei Aufnahmeräumen zur Aufnahme zweier Medien im Bereich eines beweglichen Bauteils. Dichtungsanordnungen sind aus der DE 10 2006 055 298 A1, der DE 10 2014 100 577 A1, der WO 2016/096516 A1, der WO 2014/048606 A1, der DE 10 2013 000 154 A1, der EP 1 277 951 A2, der EP 1 394 452 A1, der DE 10 2016 202 211 A1, der DE 101 16 658 A, der EP 1 284 358 A2, der DE 10 2017 211 353 A1 (gemäß der Präambel von Anspruch 1), der US 2007/057472 A1 und der DE 10 2017 110 115 A1 bekannt.

Ferner betrifft die vorliegende Erfindung die Verwendung einer erfindungsgemäßen Dichtungsanordnung als Stangendichtung, Kolbendichtung und/oder Wellendichtung.

Die Erfindung betrifft weiter eine Hochdruckpumpe, umfassend mindestens eine erfindungsgemäße Dichtungsanordnung.

Ferner betrifft die Erfindung ein Verfahren zur Herstellung einer Dichtungsanordnung. Der vorliegenden Erfindung liegt die Aufgabe zugrunde, eine Dichtungsanordnung bereitzustellen, welche einfach montierbar ist und eine zuverlässige Abdichtung gewährleistet.

Diese Aufgabe wird erfindungsgemäß durch eine Dichtungsanordnung gemäß dem unabhängigen Vorrichtungsanspruch gelöst.

Es wird vorzugsweise eine Dichtungsanordnung zur Abdichtung zwischen zwei Aufnahmeräumen zur Aufnahme zweier Medien im Bereich eines beweglichen Bauteils, welches längs einer Längsmittelachse des beweglichen Bauteils verschiebbar und/oder um die Längsachse drehbar ist, bereitgestellt. Die Dichtungsanordnung umfasst insbesondere ein Trägerelement und ein ringförmiges an dem Trägerelement angeordnetes Dichtelement, welches in montiertem Zustand zur Abdichtung an dem beweglichen Bauteil anliegt.

Das Dichtelement ist vorzugsweise in einem Spritzgussverfahren an dem Trägerelement festgelegt.

Durch die Festlegung des Dichtelements an dem Trägerelement in einem Spritzgussverfahren ist oder wird insbesondere eine haltbare Verbindung zwischen dem Trägerelement und dem Dichtelement ausgebildet. Insbesondere sind Toleranzen bei der Herstellung des Trägerelements im Wesentlichen unerheblich, da das Dichtelement individuell an Abmessungen des jeweiligen Trägerelements angepasst werden kann.

Vorzugsweise ist das Dichtelement an das Trägerelement angespritzt. Beispielsweise ist das Trägerelement vollständig oder teilweise mit dem Dichtelement umspritzt.

Günstig kann es sein, wenn das Dichtelement in das Trägerelement eingespritzt ist.

Die Festlegung in einem Spritzgussverfahren kann eine einfache Herstellung und eine vereinfachte Montage der Dichtungsanordnung ermöglichen. So können Herstellungskosten gespart werden.

Vorteilhaft kann es sein, wenn das Trägerelement und das Dichtelement in einem fertiggestellten Zustand der Dichtungsanordnung nicht zerstörungsfrei voneinander lösbar sind.

Das Trägerelement ist vorzugsweise passgenau in eine Dichtungsaufnahme eines Gehäuses eines ersten Aufnahmeraums und/oder eines zweiten Aufnahmeraums aufnehmbar.

Jede Bezugnahme auf die Längsmittelachse des beweglichen Bauteils gilt vorzugsweise auch für eine Symmetrieachse der Dichtungsanordnung und/oder eine Längsmittelachse der Dichtungsanordnung und/oder eine Mittelachse der Dichtungsanordnung und/oder eine Zentralachse der Dichtungsanordnung.

Die axiale Richtung erstreckt sich vorzugsweise von einem zweiten Aufnahmeraum der zwei Aufnahmeräume in Richtung eines ersten Aufnahmeraums der zwei Aufnahmeräume. Insbesondere erstreckt sich die axiale Richtung von einem Außenabschnitt des Trägerelements in Richtung eines Dichtelementaufnahmeabschnitts des Trägerelements, wobei die axiale Richtung insbesondere parallel zu der Längsmittelachse des beweglichen Bauteils angeordnet ist.

Es kann vorgesehen sein, dass das Dichtelement einen axialen Endabschnitt des Trägerelements, welcher einem ersten Aufnahmeraum der zwei Aufnahmeräume zugewandt ist, in axialer Richtung umgibt.

Der erste Aufnahmeraum ist vorzugsweise mit einem ersten Medium, insbesondere mit einer Flüssigkeit, beispielsweise mit Motoröl, befüllt.

Ein auf einer dem ersten Aufnahmeraum abgewandten Seite der Dichtungsanordnung angeordneter zweiter Aufnahmeraum der zwei Aufnahmeräume ist vorzugsweise mit einem zweiten Medium, insbesondere mit einer Flüssigkeit, beispielsweise mit einem Kraftstoff, befüllt.

Es kann vorgesehen sein, dass ein axialer Endabschnitt der Dichtungsanordnung von dem Dichtelement gebildet ist. Das Trägerelement endet dabei in axialer Richtung insbesondere vor dem Dichtelement. So kann ein Kraftschluss und/oder Formschluss zwischen dem Dichtelement und dem Trägerelement in axialer Richtung ausgebildet werden.

Vorzugweise bedeckt das Dichtelement den axialen Endabschnitt des Trägerelements in axialer Richtung bezüglich der Längsmittelachse des beweglichen Bauteils. So ist vorzugsweise ein Eindringen und/oder Hinterwandern eines Mediums zwischen einen Bereich zwischen dem Trägerelement und dem Dichtelement minimiert und/oder verhindert.

Vorteilhaft kann es sein, wenn das Dichtelement den axialen Endabschnitt dreiseitig umschließt. Beispielsweise ist das Dichtelement in direktem stofflichen Kontakt mit einer radial innenliegenden Anlagefläche des Trägerelements, einer radial außenliegenden Anlagefläche des Trägerelements und einer Stirnseite des Trägerelements. Die Stirnseite des Trägerelements verbindet insbesondere die radial innenliegende Anlagefläche und die radial außenliegende Anlagefläche des Trägerelements.

Insbesondere ist das Trägerelement in Umfangsrichtung des beweglichen Bauteils vollständig von dem Dichtelement umgeben.

Das Dichtelement bildet vorzugsweise stirnseitig eine statische Dichtlippe. Die Dichtlippe wirkt vorzugsweise dichtungsunterstützend und/oder schwindungshemmend.

Es kann vorgesehen sein, dass das Dichtelement stirnseitig mit Unterbrechungen bezüglich der Umfangsrichtung des beweglichen Bauteils ausgebildet ist.

Günstig kann es sein, wenn der axiale Endabschnitt des Trägerelements in axialer Richtung bezüglich der Längsmittelachse des beweglichen Bauteils und/oder stirnseitig mit Material des Dichtelements umspritzt ist.

Es kann vorgesehen sein, dass das Dichtelement die radial außenliegende Anlagefläche des Trägerelements umgibt. Ergänzend oder alternativ umgibt das Dichtelement die radial innenliegende Anlagefläche des Trägerelements. Insbesondere ist das Dichtelement an die radial außenliegende Anlagefläche angespritzt. Insbesondere ist das Dichtelement an die radial innenliegende Anlagefläche des Trägerelements angespritzt. Dies kann für eine verbesserte Haftung des Dichtelements an dem Trägerelement sorgen.

Ein hohlzylinderförmiger Dichtelementaufnahmeabschnitt des Trägerelements weist eine oder mehrere radiale Öffnungen auf, welche von dem Dichtelement gefüllt sind. Das Dichtelement ist insbesondere durch die eine oder mehreren radialen Öffnungen des Trägerelements hindurchgespritzt. So kann eine Verankerung des Dichtelements an dem Trägerelement ausgebildet sein. Das Dichtelement ist so insbesondere längs der axialen und/oder einer radialen Richtung bezüglich der Längsmittelachse des beweglichen Bauteils relativ zu dem Trägerelement fixiert.

Eine besonders gute Festlegung des Dichtelements an dem Trägerelement kann ausgebildet werden, wenn das Dichtelement durch die eine oder die mehreren radialen Öffnungen hindurchgeführt ist und sich entlang der radial innenliegenden Anlagefläche und/oder der radial außenliegenden Anlagefläche des Trägerelements erstreckt.

Das Hindurchführen des Dichtelements durch die eine oder mehreren radialen Öffnungen wirkt vorzugsweise schwindungshemmend. Insbesondere können Bindenahtprobleme reduziert werden, welche beispielsweise bei einer herkömmlichen Festlegung des Dichtelements an dem Trägerelement auftreten.

Die eine oder mehreren radialen Öffnungen des Trägerelements bilden vorzugsweise in radialer Richtung bezüglich der Längsmittelachse des beweglichen Bauteils Öffnungen, insbesondere Durchtrittsöffnungen, in dem Trägerelement.

Beispielsweise sind die eine oder mehreren radialen Öffnungen in einem Dichtelementaufnahmeabschnitt des Trägerelements angeordnet, welcher insbesondere einen Grundkörper der Dichtelements aufnimmt.

In Ausführungsformen, in welchen das Trägerelement mehrere Öffnungen aufweist, durchbrechen diese das Trägerelement vorzugsweise in unterschiedlichen radialen Richtungen bezüglich der Längsmittelachse des beweglichen Bauteils.

Vorteilhaft kann es sein, wenn mehrere radiale Öffnungen des Trägerelements bezüglich einer Umfangsrichtung des beweglichen Bauteils regelmäßig in dem Trägerelement angeordnet sind.

Eine oder mehrere der einen oder mehreren radialen Öffnungen des Trägerelements sind vorzugsweise Bohrung(en).

Beispielsweise sind eine oder mehrere radiale Öffnungen des Trägerelements aus dem Trägerelement ausgestanzt.

Günstig kann es sein, wenn die eine oder mehreren radialen Öffnungen eine runde Form aufweisen. Unter "rund" ist vorzugsweise im Wesentlichen kreisförmig zu verstehen.

Ergänzend oder alternativ weisen eine oder mehrere radiale Öffnungen des Trägerelements eine nicht runde Form auf. Beispiele für nicht runde Formen der radialen Öffnungen sind eine ovale Form, Dreieck-Form, eine Wolkenform und/oder eine Rechteck-Form.

Vorzugsweise weisen sämtliche radialen Öffnungen des Trägerelements dieselbe Form auf.

Alternativ kann vorgesehen sein, dass das Trägerelement mehrere radiale Öffnungen unterschiedlicher Form aufweist.

Beispielsweise sind eine oder mehrere radiale Öffnungen Langlöcher. Hierdurch kann ein optimiertes Schrumpfverhalten des Dichtelements erhalten werden.

Vorzugsweise ist das Trägerelement in axialer Richtung bezüglich der Längsmittelachse des beweglichen Bauteils zwischen der einen oder den mehreren radialen Öffnungen des Trägerelements in einem axialen Endabschnitt im Wesentlichen vierseitig und/oder vollständig von dem Dichtelement umgeben.

Vorzugsweise ist eine Labyrinth-artige Festlegung des Dichtelements an dem Trägerelement ausgebildet.

Es kann vorgesehen sein, dass das Trägerelement einen Querabschnitt aufweist, dessen Haupterstreckungsebene im Wesentlichen quer, insbesondere senkrecht, zu der Längsmittelachse des beweglichen Bauteils angeordnet ist.

Der Querabschnitt weist vorzugsweise eine oder mehrere axiale Vertiefungen auf, in welchen der Querabschnitt eine lokal reduzierte Dicke und/oder einen axialen Rücksprung in axialer Richtung bezüglich der Längsmittelachse des beweglichen Bauteils aufweist.

Ergänzend oder alternativ weist das Dichtelement eine oder mehrere axiale Erhebungen auf, in welchen das Dichtelement in axialer Richtung bezüglich der Längsmittelachse des beweglichen Bauteils eine lokal erhöhte Dicke und/oder einen axialen Vorsprung aufweist.

Die eine oder mehreren axialen Erhebungen sind insbesondere in den einen oder die mehreren axialen Vertiefungen aufgenommen und/oder greifen darin ein. So kann vorzugsweise ein schwindungshemmendes Design des Dichtelements ausgebildet sein oder werden.

Jeweils zwei der einen oder mehreren axialen Vertiefungen des Querabschnitts und der einen oder mehreren axialen Erhebungen des Dichtelements sind vorzugweise komplementär zueinander ausgebildet.

Vorzugsweise verhindern die eine oder mehreren axialen Vertiefungen und die eine oder mehreren axialen Erhebungen in montiertem Zustand der Dichtungsanordnung eine Verschiebung des Dichtelements relativ zu dem Trägerelement längs der axialen Richtung bezüglich der Längsmittelachse des beweglichen Bauteils. Es ist vorzugsweise ein Formschluss und/oder Kraftschluss zwischen dem Dichtelement und dem Trägerelement ausgebildet.

Eine Verschiebung des Dichtelements relativ zu dem Trägerelement entgegen der axialen Richtung ist vorzugsweise durch eine Bedeckung des axialen Endabschnitts des Trägerelements mit dem Dichtelement gehemmt und/oder blockiert.

Insbesondere bilden die eine oder mehreren axialen Vertiefungen und die eine oder mehreren axialen Erhebungen in montiertem Zustand der Dichtungsanordnung einen Formschluss und/oder Kraftschluss in radialer Richtung und/oder axialer Richtung bezüglich der Längsmittelachse des beweglichen Bauteils.

Das Dichtelement ist vorzugsweise relativ zu dem Trägerelement in radialer Richtung und/oder axialer Richtung fixiert.

Eine innere Leckage innerhalb der Dichtungsanordnung kann vermieden werden.

Im Falle einer lokal reduzierten Dicke ist eine Dicke des Trägerelements im Bereich der einen oder mehreren axialen Vertiefungen vorzugsweise um ca. 10 % oder mehr, insbesondere um ca. 20 % oder mehr, geringer als eine durchschnittliche Dicke des Trägerelements in daran angrenzenden Bereichen.

Im Falle einer lokal reduzierten Dicke ist die Dicke des Trägerelements im Bereich der einen oder mehreren axialen Vertiefungen vorzugsweise um ca. 60 % oder weniger, beispielsweise um ca. 40 % oder weniger, geringer als die durchschnittliche Dicke des Trägerelements in daran angrenzenden Bereichen.

Im Falle einer lokal erhöhten Dicke ist eine Dicke des Dichtelements im Bereich der einen oder mehreren axialen Erhebungen vorzugsweise um ca. 10% oder mehr, insbesondere um ca. 20 % oder mehr, größer als eine durchschnittliche Dicke des Dichtelements in daran angrenzenden Bereichen.

Im Falle einer lokal erhöhten Dicke ist die Dicke des Dichtelements im Bereich der einen oder mehreren axialen Erhebungen vorzugsweise um ca. 60 % oder weniger, insbesondere ca. 40 % oder weniger, größer als die durchschnittliche Dicke des Dichtelements in daran angrenzenden Bereichen.

Vorzugsweise sind die eine oder mehreren axialen Vertiefungen, insbesondere ringförmige, Nuten und/oder Sicken.

In Ausführungsformen, in welchen mehrere axiale Vertiefungen vorgesehen sein, sind die axialen Vertiefungen vorzugsweise koaxial.

Alternativ oder ergänzend zur Ausbildung der einen oder mehreren axialen Vertiefungen in Form von Bereichen verminderter Dicke, ist zumindest eine der axialen Vertiefungen durch eine Wölbung des Querabschnitts in axialer Richtung gebildet.

Die Wölbung bildet insbesondere einen axialen Rücksprung.

Vorzugsweise sind die eine oder mehreren axialen Erhebungen, insbesondere ringförmige, Materialverdickungen in dem Dichtelement.

Durch die axialen Vertiefungen und die, insbesondere darin eingreifenden, axialen Erhebungen ist vorzugsweise eine radiale und/oder axiale Sicherung einer Position des Dichtelements relativ zu dem Trägerelement ausgebildet.

Alternativ zu den zuvor beschriebenen Ausführungsformen kann vorgesehen sein, dass eine oder mehrere axiale Vertiefungen in dem Dichtelement und eine oder mehrere axiale Erhebungen in dem Trägerelement ausgebildet sind und/oder werden. Die Ausführungen im Zusammenhang mit den axialen Vertiefungen und/oder Erhebungen gelten für diese Ausführungsformen gleichermaßen.

Das Trägerelement umfasst vorzugsweise einen Außenabschnitt, welcher an einer zu dem zweiten Aufnahmeraum der zwei Aufnahmeräume hin angeordneten Seite des Dichtelementaufnahmeabschnitts angeordnet ist.

Der Dichtelementaufnahmeabschnitt und der Außenabschnitt sind insbesondere durch den Querabschnitt des Trägerelements miteinander verbunden.

Es kann vorgesehen sein, dass das Trägerelement einen Randabschnitt aufweist, welcher den Außenabschnitt ringförmig umgibt. Im Bereich des Randabschnitts ist das Trägerelement vorzugsweise bezüglich der Längsmittelachse des beweglichen Bauteils nach außen gebogen.

Vorzugsweise ist das Trägerelement ein Metallbauteil, insbesondere ein tiefgezogenes Metallbauteil.

Es kann vorgesehen sein, dass das Trägerelement einen oder mehrere Durchbrüche und/oder eine oder mehrere Ausklinkungen umfasst.

Günstig kann es sein, wenn das Dichtelement an einer dem zweiten Aufnahmeraum zugewandten Seite einen Kragenabschnitt aufweist, welcher sich an den Grundkörper des Dichtelements anschließt und an einem Ende eine Dichtlippe aufweist. Die Dichtlippe ist insbesondere in Umfangsrichtung des beweglichen Bauteils und/oder des Dichtelements durch eine oder mehrere Entlastungsnuten unterbrochen und/oder durchbrochen.

Der Kragenabschnitt bildet vorzugsweise ein von dem axialen Endabschnitt des Trägerelements abgewandtes axiales Ende des Dichtelements. Der Kragenabschnitt kann das Dichtelement schützen, beispielsweise während eines Transports oder einer Montage.

Die eine oder mehrere Entlastungsnuten können vorzugsweise Fertigungstoleranzen bei dem Trägerelement ausgleichen.

Durch die Dichtlippe ist vorzugsweise ein Eindringen und/oder Hinterwandern eines Mediums zwischen das Trägerelement und das Dichtelement minimiert.

Vorteilhaft kann es sein, wenn sich der Kragenabschnitt an einer dem zweiten Aufnahmeraum zugewandten Seite von dem Grundkörper des Dichtelements weg erstreckt. Der Kragenabschnitt bildet vorzugsweise eine zusätzliche Abdichtung eines Dichtungsraums.

Der Kragenabschnitt ist insbesondere an eine sich entgegen der axialen Richtung bezüglich der Längsmittelachse des beweglichen Bauteils aufweitende Form des Trägerelements angepasst.

Vorzugsweise liegt der Kragenabschnitt an einem Übergangsbereich zwischen dem Dichtelementaufnahmeabschnitt und dem Querabschnitt des Trägerelements, insbesondere unmittelbar, an.

Der Kragenabschnitt erweitert sich vorzugsweise in einer von dem radialen Endabschnitt des Trägerelements wegweisenden Richtung und/oder entgegen der axialen Richtung.

Günstig kann es sein, wenn das Dichtelement einstückig, insbesondere in einem Spritzgussverfahren hergestellt, ausgebildet ist.

Es kann vorgesehen sein, dass eine oder mehrere Entlastungsnuten in dem Dichtelement ausgebildet sind, durch welche insbesondere Spannungen in Umfangsrichtung aufnehmbar sind.

Beispielsweise ist die Dichtlippe des Kragenabschnitts in Umfangsrichtung durch eine oder mehrere Entlastungsnuten unterbrochen.

Die eine oder mehreren Entlastungsnuten sind vorzugsweise in einem Spritzgussverfahren hergestellt und/oder gespritzt.

Die Dichtlippe des Kragenabschnitts bildet insbesondere eine statische Dichtlippe und/oder dichtet statisch ab. Die Dichtlippe wirkt insbesondere dichtungsunterstützend und/oder schwindungshemmend.

Es kann vorgesehen sein, dass die Dichtlippe des Kragenabschnitts mittels einer Federvorrichtung, beispielsweise einer Art Tellerfeder, einer Spiralfeder, oder einer Balgfeder, vorgespannt ist.

Die Federvorrichtung bildet vorzugsweise einen Bestandteil der Dichtungsanordnung.

Die Federvorrichtung stützt sich vorzugsweise an einer Innenseite des Querabschnitts und/oder einer Flanke des beweglichen Bauteils ab.

Vorzugsweise umfasst das Dichtelement ein thermoplastisches Polymermaterial, insbesondere ein thermoplastisches Fluorpolymermaterial oder ist aus einem thermoplastischen Polymermaterial, insbesondere einem thermoplastischen Fluorpolymermaterial, gebildet.

Das thermoplastische Polymermaterial ist vorzugsweise schmelzverarbeitbar.

Das Fluorpolymermaterial umfasst insbesondere teilfluorierte oder vollfluorierte Polymermaterialen oder Mischungen daraus oder ist daraus gebildet.

Beispielsweise ist das Dichtelement aus PFA, PVDF oder Mischungen daraus.

Es kann vorgesehen sein, dass das Dichtelement, insbesondere der Grundkörper des Dichtelements, aus einem reinen PTFE-Material oder aus einem PTFE-Compoundmaterial gebildet ist.

Günstig kann es sein, wenn ein TFE-Copolymer mit einem Comonomeranteil von mehr als 0,5 Gew.% verwendet wird. Durch einen Comonomeranteil in diesem Größenordnungsbereich kann das Molekulargewicht der Polymerketten reduziert werden, ohne dass die mechanische Festigkeit des Materials beeinträchtigt wird, so dass die Schmelzviskosität herabgesetzt und eine Verarbeitung in einem Spritzgussverfahren ermöglicht wird.

Das Comonomer ist bevorzugt ausgewählt aus einem Perfluoralkylvinylether, insbesondere Perfluormethylvinylether, Hexafluorpropylen und Perfluor-(2,2-dimethyl-1,3-dioxol). Je nach Comonomeranteil handelt es sich bei dem vollfluorierten thermoplastischen Kunststoff dann um ein sogenanntes schmelzverarbeitbares PTFE (Comonomeranteil bis etwa 3 Gew.%), um ein PFA (mehr als etwa 3 Gew.% Perfluoralkylvinylether als Comonomer), ein MFA (mehr als etwa 3 Gew.% Perfluormethylvinylether als Comonomer) oder ein FEP (mehr als etwa 3 Gew.% Hexafluorpropylen als Comonomer).

Das TFE-Copolymer kann auch verschiedene Comonomere umfassen. Ebenso ist es möglich, dass das vollfluorierte thermoplastische Polymermaterial eine Mischung verschiedener TFE-Copolymere umfasst.

Das Material des Dichtelements, insbesondere des Grundkörpers, kann teilweise oder im Wesentlichen vollständig aus dem vollfluorierten thermoplastischen Polymermaterial gebildet sein.

Alternativ oder ergänzend hierzu kann das Material einen oder mehrere Füllstoffe umfassen, insbesondere Pigmente, reibungsvermindernde Additive und/oder die thermische Beständigkeit erhöhende Additive, um die Eigenschaften des Dichtelements weiter zu optimieren und an die jeweiligen Anforderungen anzupassen.

Als thermoplastisches Polymermaterial kann ferner insbesondere ein hochtemperaturbeständiges und/oder chemisch beständiges thermoplastisches Material vorgesehen sein, insbesondere PEEK, PEAK, PEI.

Insbesondere durch eine Herstellung des Dichtelements in einem Spritzgussverfahren kann eine hohe Formbeständigkeit des thermoplastischen Polymermaterials erzielt werden.

Es kann ein Zusatzdichtelement, insbesondere aus einem Elastomermaterial, zur Abdichtung vorgesehen sein.

Vorteilhaft kann es sein, wenn das Trägerelement eine oder mehrere radiale Vertiefungen, insbesondere eine oder mehrere Nuten, aufweist, in welcher/welchen eine oder mehrere, insbesondere komplementär dazu ausgebildete, radiale Erhebungen des Dichtelements anliegen und/oder eingreifen.

Die eine oder mehreren Nuten sind vorzugsweise ringförmig ausgebildet.

Beispielsweise sind die eine oder mehreren radialen Vertiefungen in Form von Sicken ausgebildet.

Durch ein Eingreifen und/oder Anliegen der einen oder mehreren radialen Erhebungen in/an die eine oder mehreren radialen Vertiefungen ist vorzugsweise eine Hinterschneidung des Trägerelements in axialer Richtung ausgebildet. Insbesondere ist eine Bewegung des Dichtelements relativ zu dem Trägerelement in und/oder entgegen der axialen Richtung gehemmt und/oder blockiert.

Im Bereich der einen oder mehreren radialen Erhebungen weist das Dichtelement in radialer Richtung bezüglich der Längsmittelachse des beweglichen Bauteils vorzugsweise eine um ca. 10 % oder mehr, insbesondere um ca. 20 % oder mehr, größere Dicke auf als eine durchschnittliche Dicke des Dichtelements in daran angrenzenden Bereichen.

Insbesondere ist die Dicke des Dichtelements im Bereich der einen oder mehreren radialen Erhebungen in radialer Richtung bezüglich der Längsmittelachse des beweglichen Bauteils um ca. 60 % oder weniger, insbesondere um ca. 40 % oder weniger, größer als die durchschnittliche Dicke des Dichtelements in daran angrenzenden Bereichen.

Im Bereich der einen oder mehreren radialen Vertiefungen weist das Trägerelement in radialer Richtung bezüglich der Längsmittelachse des beweglichen Bauteils vorzugsweise eine um ca. 60 % oder weniger, insbesondere um ca. 40 % oder weniger, geringere Dicke auf als eine durchschnittliche Dicke des Trägerelements in daran angrenzenden Bereichen.

Insbesondere weist das Trägerelement im Bereich der einen oder mehreren radialen Vertiefungen in radialer Richtung bezüglich der Längsmittelachse des beweglichen Bauteils eine um ca. 10 % oder mehr, insbesondere um ca. 20 % oder mehr, geringere Dicke als die durchschnittliche Dicke in daran angrenzenden Bereichen auf.

Günstig kann es sein, wenn die eine oder mehreren radialen Vertiefungen Halbbohrungen sind.

Günstig kann es sein, wenn die eine oder mehreren radialen Vertiefungen in radialer Richtung bezüglich der Längsmittelachse des beweglichen Bauteils eine runde oder nichtrunde Form, beispielsweise eine Dreieck-Form, eine Wolkenform, eine ovale Form und/oder eine Rechteck-Form, aufweisen.

Ergänzend oder alternativ zu den zuvor beschriebenen Ausführungsformen kann vorgesehen sein, dass die das Dichtelement eine oder mehrere radiale Vertiefungen und dass das Trägerelement eine oder mehrere radiale Erhebungen aufweist. Die Ausführungen im Zusammenhang mit radialen Vertiefungen und radialen Erhebungen in umgekehrter Ausbildung gelten für diese Ausführungsformen gleichermaßen.

Vorteilhaft kann es sein, wenn eine bezüglich der Längsmittelachse des beweglichen Bauteils radial innenliegende Anlagefläche des Trägerelements eine Oberflächenstrukturierung aufweist und/oder laserstrukturiert ist. So kann eine erhöhte Oberflächenqualität bereitgestellt werden.

Ergänzend oder alternativ weist eine bezüglich der Längsmittelachse des beweglichen Bauteils radial außenliegende Anlagefläche des Trägerelements eine Oberflächenstrukturierung auf und/oder ist laserstrukturiert.

Es kann vorgesehen sein, dass Bereiche der radial innenliegenden Anlagefläche und/oder Bereiche der radial außenliegenden Anlagefläche des Trägerelements eine Oberflächenstrukturierung aufweisen und/oder laserstrukturiert sind. Alternativ sind die radial innenliegende Anlagefläche des Trägerelements und/oder die radial außenliegende Anlagefläche des Trägerelements vollständig mit einer Oberflächenstrukturierung versehen und/oder laserstrukturiert.

Ergänzend oder alternativ kann vorgesehen sein, dass der Querabschnitt des Trägerelements, insbesondere an einer dem zweiten Aufnahmeraum zugewandten Seite, bereichsweise oder vollständig eine Oberflächenstrukturierung aufweist und/oder laserstrukturiert ist.

Durch die Oberflächenstrukturierung und/oder Laserstrukturierung ist insbesondere eine vergrößerte Oberfläche des Trägerelements bereitgestellt, wodurch vorzugsweise eine Anhaftung des Dichtelements an dem Trägerelement erhöht ist. Eine Hinterwanderung eines Bereichs zwischen dem Trägerelement und dem Dichtelement durch das erste oder zweite Medium kann so erschwert oder im Wesentlichen verhindert werden.

Günstig kann es sein, wenn das Trägerelement an dessen Querabschnitt auf einer dem zweiten Aufnahmeraum zugewandten Seite eine mittels Laserstrukturierung erzeugte Oberflächenstrukturierung aufweist.

Die Oberflächenstrukturierung umfasst vorzugsweise regelmäßig angeordnete, insbesondere ringförmige, Strukturen. Die Strukturen sind vorzugsweise von dem Dichtelement bedeckt und/oder ausgefüllt.

Vorteilhaft kann es sein, wenn die regelmäßig angeordneten Strukturen mehrere, insbesondere koaxial angeordnete, Vertiefungen umfassen oder als solche ausgebildet sind. Die Vertiefungen sind vorzugsweise von dem Material des Dichtelements, insbesondere vollständig, ausgefüllt.

Vorzugsweise dringt das Material des Dichtelements während des Spritzgussverfahrens zur Herstellung der Dichtungsanordnung in die Strukturen, beispielsweise Vertiefungen, der Oberflächenstrukturierung ein und/oder füllt die Oberflächenstrukturierung aus.

Im Falle von mehreren mittels Laserstrukturierung erzeugten Vertiefungen kann es für eine optimierte Haftung des Dichtelements vorteilhaft sein, wenn ein Abstand zweier benachbarter Vertiefungen zumindest näherungsweise einmal bis zweimal ihrer Tiefe senkrecht zur jeweiligen Oberfläche des Trägerelements entspricht.

Die mittels Laserstrukturierung erzeugten Vertiefungen sind vorzugsweise radiale Vertiefungen und/oder axiale Vertiefungen in dem Trägerelement.

Es kann vorgesehen sein, dass das Dichtelement mittels eines oder mehrerer Federelemente in radialer Richtung bezüglich der Längsmittelachse des beweglichen Bauteils vorspannbar ist. Das eine oder die mehreren Federelemente sind oder werden insbesondere zwischen einem oder mehreren Dichtlippenabschnitten des Dichtelements und dem Grundkörper des Dichtelements eingespannt. Ergänzend oder alternativ sind oder werden ein oder mehrere Federelemente zwischen einem oder mehreren Dichtlippenabschnitten des Dichtelements und einer radial innenliegenden Anlagefläche des Trägerelements eingespannt.

Vorzugsweise weisen das eine oder die mehreren Federelemente der Dichtungsanordnung, insbesondere an einer in montiertem Zustand von dem beweglichen Bauteil abgewandten Seite, mindestens ein, insbesondere hakenförmiges, Haltelement auf. Das mindestens eine, insbesondere hakenförmige, Halteelement greift insbesondere in mindestens einen Haltevorsprung in dem Dichtelement oder dem Trägerelement ein.

Durch das mindestens eine Halteelement ist vorzugsweise eine Federabstützung gebildet.

Insbesondere hintergreift das mindestens eine, insbesondere hakenförmige, Halteelement den mindestens einen Haltevorsprung in dem Dichtelement oder dem Trägerelement.

Alternativ zu einer Befestigung des mindestens einen Halteelements in mindestens einem Haltevorsprung kann sich das mindestens eine Halteelement auch an einer Seitenfläche des Dichtelements abstützen und/oder teilweise in den Grundkörper des Dichtelements eingebettet sein.

Beispielsweise ist das mindestens eine Halteelement eine Federrückhaltenase.

Durch das mindestens eine Halteelement und/oder den mindestens einen Haltevorsprung ist insbesondere eine axiale Position des jeweiligen Federelements gegen eine Verschiebung längs der axialen Richtung bezüglich der Längsmittelachse des beweglichen Bauteils gesichert.

Alternativ zu einem Halteelement in einem oder mehreren Federelementen kann vorgesehen sein, dass freie Enden eines oder mehrerer Federelemente ein oder mehrere Haltevorsprünge in dem Grundkörper des Dichtelements oder dem Trägerelement in axialer Richtung bezüglich der Längsmittelachse des beweglichen Bauteils hintergreifen und/oder von diesen in axialer Richtung gehalten sind.

Günstig kann es sein, wenn das Dichtelement in axialer Richtung und in mindestens einer radialen Richtung bezüglich der Längsmittelachse des beweglichen Bauteils formschlüssig und/oder kraftschlüssig und/oder stoffschlüssig mit dem Trägerelement verbunden ist.

Günstig kann es sein, wenn das Dichtelement einen Dichtlippenabschnitt und einen weiteren Dichtlippenabschnitt umfasst, welche bezüglich der Längsmittelachse des beweglichen Bauteils radial innenliegend angeordnet sind und jeweils eine oder mehrere, insbesondere dynamische, Dichtlippen umfassen. Die Dichtlippenabschnitte sind vorzugsweise dynamische Abschnitte.

Die vorliegende Erfindung betrifft ferner die Verwendung einer erfindungsgemäßen Dichtungsanordnung als Stangendichtung, Kolbendichtung und/oder Wellendichtung, insbesondere in einer Kraftstoffpumpe und/oder Kolbenpumpe.

Ferner betrifft die vorliegende Erfindung eine Hochdruckpumpe, umfassend mindestens eine erfindungsgemäße Dichtungsanordnung.

Die vorliegende Erfindung betrifft ferner ein Verfahren zur Herstellung einer erfindungsgemäßen Dichtungsanordnung zur Abdichtung zwischen zwei Aufnahmeräumen zur Aufnahme zweier Medien im Bereich eines beweglichen Bauteils, welches längs einer Längsmittelachse des beweglichen Bauteils verschiebbar und/oder um die Längsmittelachse drehbar ist, insbesondere zur Herstellung einer erfindungsgemäßen Dichtungsanordnung.

Das Verfahren umfasst das Festlegen des ringförmigen Dichtelements an dem Trägerelement in einem Spritzgussverfahren.

Die im Zusammenhang mit der erfindungsgemäßen Dichtungsanordnung ausgeführten Merkmale und/oder Vorteile gelten für das erfindungsgemäße Verfahren vorzugsweise gleichermaßen.

Günstig kann es sein, wenn eine bezüglich der Längsmittelachse des beweglichen Bauteils radial innenliegende Anlagefläche des Trägerelements mit einem Laser strukturiert wird, bevor das Dichtelement festgelegt, insbesondere angespritzt, wird.

Ergänzend oder alternativ kann vorgesehen sein, dass eine bezüglich der Längsmittelachse des beweglichen Bauteils radial außenliegende Anlagefläche des Trägerelements mit einem Laser strukturiert wird, bevor das Dichtelement festgelegt, insbesondere angespritzt, wird.

Beispielsweise wird die Oberfläche der radial innenliegenden Anlagefläche und/oder der radial außenliegenden Anlagefläche derart mit einem Laser, insbesondere mittels Laserinterferenzstrukturierung, behandelt, dass eine Riffelung der Oberfläche entsteht.

Die Oberfläche wird beispielsweise lokal aufgeschmolzen, so dass die gewünschte Oberflächenstruktur entsteht.

Die Riffelung kann Noppen und/oder Netzstrukturen auf der Oberfläche umfassen.

Eine Oberflächenstrukturierung wird vorzugsweise als regelmäßige Oberflächenstrukturierung, beispielsweise ringförmige Vertiefungen, ausgebildet.

Alternativ kann die Oberflächenstrukturierung auch in einer unregelmäßigen Struktur erfolgen.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Längsschnitt durch eine erste Ausführungsform einer Dichtungsanordnung zur Abdichtung zwischen einem beweglichen Bauteil und einer Dichtungsaufnahme eines Gehäuses;
- Fig. 2: einen Ausschnitt eines schematischen Längsschnitts durch eine zweite Ausführungsform einer Dichtungsanordnung, bei welcher ein Dichtelement derart an ein Trägerelement der Dichtungsanordnung angespritzt ist, dass das Trägerelement stirnseitig von dem Dichtelement umschlossen ist;
- Fig. 3: eine der Fig. 2 entsprechende schematische Darstellung einer dritten Ausführungsform einer Dichtungsanordnung, bei welcher in dem Trägerelement radiale Öffnungen vorgesehen sind, durch welche sich das Dichtelement erstreckt;
- Fig. 4: eine der Fig. 2 entsprechende schematische Darstellung einer vierten Ausführungsform einer Dichtungsanordnung, bei welcher in einer radial außenliegenden Anlagefläche des Trägerelements zwei radiale Vertiefungen vorgesehen sind, an denen zwei radiale Erhebungen des Dichtelements anliegen;
- Fig. 5: einen schematischen Längsschnitt durch eine fünfte Ausführungsform einer Dichtungsanordnung, bei welcher das Dichtelement einen Kragenabschnitt mit einer Dichtlippe aufweist, wobei der Kragenabschnitt in einem Übergangsbereich von einem Dichtelementaufnahmeabschnitt zu einem Querabschnitt des Trägerelements innen an dem Trägerelement anliegt und/oder dieses umgreift; und
- Fig. 6: eine der Fig. 2 entsprechende Darstellung einer sechsten Ausführungsform einer Dichtungsanordnung, bei welcher das Trägerelement in einem Querschnitt vierseitig von dem Dichtelement umgebene Abschnitte aufweist.

Gleiche oder funktional äquivalente Elemente sind in sämtlichen Figuren mit denselben Bezugszeichen bezeichnet.

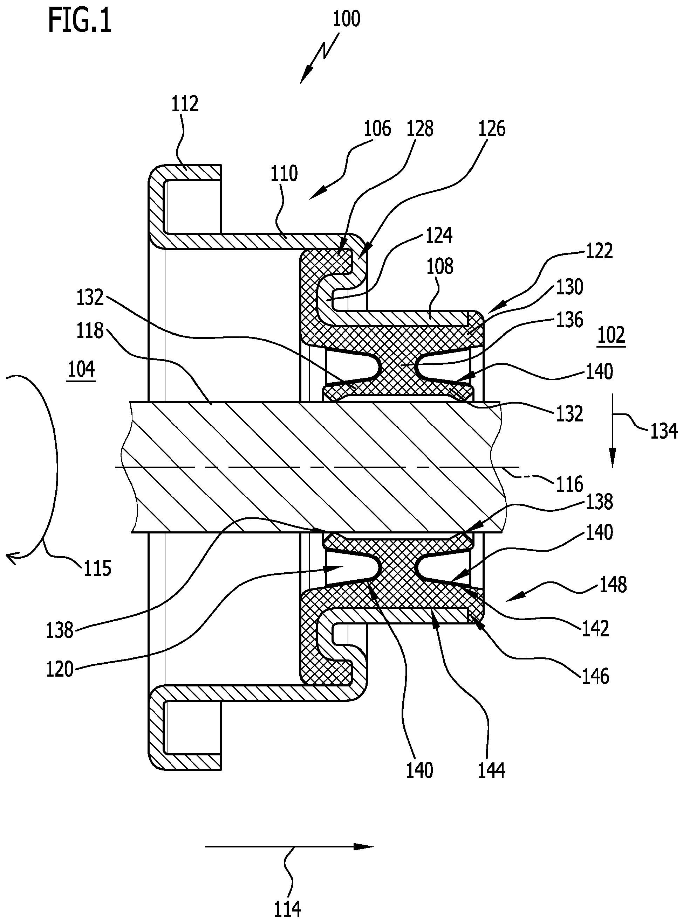

Eine in Fig. 1 dargestellte, als Ganzes mit 100 bezeichnete Dichtungsanordnung für eine Hochdruckpumpe dient vorzugsweise einer Abdichtung zwischen einem ersten Aufnahmeraum 102, der mit einer Flüssigkeit, beispielsweise mit Motoröl, befüllt ist, und einem zweiten Aufnahmeraum 104, der mit einer anderen Flüssigkeit, beispielsweise Kraftstoff, insbesondere Benzin, befüllt ist.

Die Dichtungsanordnung 100 umfasst vorliegend ein Trägerelement 106 mit einem mittigen, im Wesentlichen hohlzylindrischen Dichtelementaufnahmeabschnitt 108 und einem den Dichtelementaufnahmeabschnitt 108 ringförmig umgebenden Außenabschnitt 110.

Ferner umfasst das Trägerelement 106 insbesondere einen Randabschnitt 112, welcher sich an einer von dem Dichtelementaufnahmeabschnitt 108 abgewandten Seite des Außenabschnitts 110 an den Außenabschnitt 110 anschließt und/oder den Außenabschnitt 110 ringförmig umgibt. Der Randabschnitt 112 ist beispielsweise in radialer Richtung 134 bezüglich einer Längsmittelachse 116 eines beweglichen Bauteils 118 nach außen gewölbt.

Das bewegliche Bauteil 118 ist vorzugsweise zylinderförmig und/oder ist in einem montierten Zustand der Dichtungsanordnung 100 vorzugsweise beweglich relativ zu der Dichtungsanordnung 100 angeordnet.

Beispielsweise ist das bewegliche Bauteil 118 eine Stange und/oder ein Kolben und/oder eine Welle der Hochdruckpumpe oder bildet einen Bestandteil davon.

Die Dichtungsanordnung 100 kann insbesondere derart genutzt werden, dass eine nicht dargestellte Hülse in den Außenabschnitt 110 des Trägerelements 106 eingepresst ist. Eine Stirnwand der Hülse begrenzt dann vorzugsweise zusammen mit dem Dichtelementaufnahmeabschnitt 108 einen Dichtungsraum 120, in welchem ein ringförmiges Dichtelement 122 angeordnet ist.

Das Dichtelement 122 liegt in einem radial inneren Bereich vorzugsweise an einer Mantelfläche des beweglichen Bauteils 118 an.

Der Dichtelementaufnahmeabschnitt 108 und der Außenabschnitt 110 sind vorzugsweise über einen Querabschnitt 124 des Trägerelements 106 miteinander verbunden.

Der Querabschnitt 124 weist vorzugsweise eine Haupterstreckungsebene auf, welche quer, insbesondere senkrecht, zu der Längsmittelachse 116 des beweglichen Bauteils 118 angeordnet ist.

Das Trägerelement 106 ist vorzugsweise einstückig ausgebildet.

Das Trägerelement 106 ist insbesondere ein Metallbauteil, beispielsweise ein tiefgezogenes Metallbauteil.

Es kann vorgesehen sein, dass das Trägerelement 106 einen oder mehrere Durchbrüche und/oder eine oder mehrere Ausklinkungen umfasst.

Längs einer axialen Richtung 114 bezüglich der Längsmittelachse 116 des beweglichen Bauteils 118 sind vorzugsweise folgende Elemente des Trägerelements hintereinander angeordnet:
- der Randabschnitt 112; und/oder
- der Außenabschnitt 110; und/oder
- der Querabschnitt 124; und/oder
- der Dichtelementaufnahmeabschnitt 108.

Alternativ zu einer einstückigen Ausbildung des Trägerelements 106 kann vorgesehen sein, dass einzelne oder mehrere der folgenden Elemente als separate Bauteile hergestellt sind und stoffschlüssig und/oder formschlüssig und/oder kraftschlüssig mit den übrigen Elementen des Trägerelements 106 verbunden sind: der Dichtelementaufnahmeabschnitt 108, der Querabschnitt 124, der Außenabschnitt 110, der Randabschnitt 112.

Sämtliche Bezugnahmen auf die Längsmittelachse 116 des beweglichen Bauteils 118 gelten vorzugsweise auch für eine Längsmittelachse der Dichtungsanordnung 100 und/oder eine Symmetrieachse der Dichtungsanordnung 100 und/oder eine Zentralachse der Dichtungsanordnung 100 und/oder eine Mittelachse der Dichtungsanordnung 100.

Vorliegend weist der Querabschnitt 124 eine axiale Vertiefung in Form eines axialen Rücksprungs 126 bezüglich der radialen Richtung 134 auf.

Vorzugsweise ist der axiale Rücksprung 126 als, beispielsweise ringförmig in Umfangsrichtung 115 verlaufende, Wölbung in radialer Richtung 134 ausgebildet.

Die Umfangsrichtung 115 ist vorzugsweise eine Umfangsrichtung 115 des beweglichen Bauteils 118 und/oder der Dichtungsanordnung 100 und/oder des Trägerelements 106.

Es kann vorgesehen sein, dass das Dichtelement 122 in den axialen Rücksprung 126 des Trägerelements 106 eingespritzt ist und/oder wird.

Hierdurch/Hierbei weist das Dichtelement 122 vorzugsweise eine axiale Erhebung in Form eines, beispielsweise ringförmig verlaufenden, axialen Vorsprungs 128 auf. Der axiale Vorsprungs 128 ist vorzugsweise ringförmig längs der Umfangsrichtung 115 und/oder verläuft um einen Grundkörper 130 des Dichtelements 122 ringförmig herum.

Es kann vorgesehen sein, dass der axiale Vorsprung 128 eine zumindest näherungsweise hohlzylindrische Form aufweist.

Aufgrund des Eingreifens des axialen Vorsprungs 128 in den axialen Rücksprung 126 sind das Dichtelement 122 und das Trägerelement 106 vorzugsweise relativ zueinander arretiert. Vorzugsweise ist eine Verschiebung des Dichtelements 122 längs der axialen Richtung 114 relativ zu dem Trägerelement 106 gehemmt und/oder blockiert.

Insbesondere ist der axiale Vorsprung 128 in den axialen Rücksprung 126 eingeschoben. Ein Herausschieben des axialen Vorsprungs 128 aus dem axialen Rücksprung 126 ist beispielsweise durch eine stirnseitige Überdeckung eines axialen Endabschnitts 146 des Trägerelements 106 durch das Dichtelement 106 im Wesentlichen gehemmt und/oder blockiert.

Durch den axialen Vorsprung 128 einerseits und den axialen Rücksprung 126 andererseits ist/wird vorzugsweise eine Bewegung des Dichtelements 122 relativ zu dem Trägerelement 106 in radialer Richtung 134 gehemmt und/oder blockiert.

Das Dichtelement 122 ist vorliegend insgesamt in einem Spritzgussverfahren an dem Trägerelement 106 festgelegt.

Günstig kann es sein, wenn das Dichtelement 122 an das Trägerelement 106 angespritzt wird.

Vorteilhaft kann es sein, wenn das Dichtelement 122 ein thermoplastisches Polymermaterial, insbesondere ein thermoplastisches Fluorpolymermaterial, umfasst oder aus einem thermoplastischen Polymermaterial, insbesondere aus einem thermoplastischen Fluorpolymermaterial, gebildet ist.

Vorzugsweise ist das thermoplastische Polymermaterial ein schmelzverarbeitbares Polymermaterial.

Es kann vorgesehen sein, dass das Dichtelement 122, insbesondere der Grundkörper 130 des Dichtelements 122, aus einem PTFE-Material oder aus einem PTFE-Compoundmaterial gebildet ist.

Das eingesetzte Polymermaterial ist bevorzugt ein TFE-Copolymer mit einem Comonomeranteil von mehr als 0,5 Gew.%.

Das Comonomer ist bevorzugt ausgewählt aus einem Perfluoralkylvinylether, insbesondere Perfluormethylvinylether, Hexafluorpropylen und Perfluor-(2,2-dimethyl-1,3-dioxol). Je nach Comonomeranteil handelt es sich bei dem vollfluorierten thermoplastischen Kunststoff dann um ein so genanntes schmelzverarbeitbares PTFE (Comonomeranteil bis etwa 3 Gew.%), um ein PFA (mehr als etwa 3 Gew.% Perfluoralkylvinylether als Comonomer), ein MFA (mehr als etwa 3 Gew.% Perfluormethylvinylether als Comonomer) oder ein FEP (mehr als etwa 3 Gew.% Hexafluorpropylen als Comonomer).

Das TFE-Copolymer kann auch verschiedene Comonomere umfassen. Ebenso ist es möglich, dass das vollfluorierte thermoplastische Polymermaterial eine Mischung verschiedener TFE-Copolymere umfasst.

Das Material des Dichtelements 122, insbesondere des Grundkörpers 130, kann teilweise oder im Wesentlichen vollständig aus dem vollfluorierten thermoplastischen Polymermaterial gebildet sein.

Alternativ oder ergänzend hierzu kann das Material einen oder mehrere Füllstoffe umfassen, insbesondere Pigmente, reibungsvermindernde Additive und/oder die thermische Beständigkeit erhöhende Additive, um die Eigenschaften des Dichtelements weiter zu optimieren und an die jeweiligen Anforderungen anzupassen.

Als thermoplastisches Polymermaterial kann ferner insbesondere ein hochtemperaturbeständiges und/oder chemisch beständiges thermoplastisches Material vorgesehen sein, insbesondere PEEK, PEAK, PEI, etc. und/oder ein Compoundmaterial, umfassend ein oder mehrere der vorstehend genannten Materialien.

Das Dichtelement 122 ist und/oder wird vorzugsweise in einen von dem im Wesentlichen hohlzylinderförmigen Trägerelement 106 gebildeten Hohlraum eingespritzt.

Das Dichtelement 122 weist vorzugsweise den Grundkörper 130 und mehrere Dichtlippenabschnitte 132 auf. Die Dichtlippenabschnitte 132, vorliegend zwei Dichtlippenabschnitte 132, sind relativ zu dem Grundkörper 130 vorzugsweise bezüglich der radialen Richtung 134 radial innenliegend angeordnet.

Günstig kann es sein, wenn sich die beiden Dichtlippenabschnitte 132 beidseitig von einem Verbindungsabschnitt 136 in axialer Richtung 114 weg erstrecken.

Der Grundkörper 130 des Dichtelements 122 und die Dichtlippenabschnitt 132 sind vorliegend über den Verbindungsabschnitt 136 des Dichtelements 122 miteinander verbunden. Das Dichtelement 122 grenzt insbesondere in radialer Richtung 134 nach innen mittels des Dichtlippenabschnitts 132 an das bewegliche Bauteil 118 an.

Die Dichtlippenabschnitte 132 dienen vorzugsweise einer dynamischen Abdichtung zwischen dem Dichtelement 122 und dem sich relativ zu dem Dichtelement 122 bewegenden, insbesondere längs der radialen Richtung 134 verschieblichen, beweglichen Bauteil 118.

Günstig kann es sein, wenn die Dichtlippenabschnitte 132 dynamische Abschnitte bilden, welche relativ zu dem Grundkörper 130 beweglich sind, wenn sich das bewegliche Bauteil 118 bewegt. Der Grundkörper 130 bildet vorzugsweise einen statischen Abschnitt des Dichtelements 122.

Die Dichtlippenabschnitte 132 weisen vorzugsweise an axialen Enden jeweils eine Dichtlippe 138 auf, welche einer, insbesondere fluiddichten, Abdichtung und/oder Anlage an dem beweglichen Bauteil 118 dient. Die Dichtlippen 138 sind vorzugsweise ringförmig und/oder rotationssymmetrisch bezüglich einer Symmetrieachse der Dichtungsanordnung 100 ausgebildet.

Zur Erzielung einer erhöhten Dichtwirkung können ein oder mehrere Federelemente 140 des Dichtelements 122 vorgesehen sein.

Das eine oder die mehreren Federelemente 140 sind vorzugsweise in einer oder mehreren Federelementaufnahmen 142 des Dichtelements 122 anordenbar oder angeordnet.

Mittels des einen oder der mehreren Federelemente 140 sind insbesondere die Dichtlippenabschnitte 132 an das bewegliche Bauteil 118 anpressbar.

Vorliegend sind zumindest zwei Federelemente 140 vorgesehen. Alternativ kann die Dichtungsanordnung 100 auch ohne Federelemente 140 ausgebildet sein.

Die Federelemente 140 weisen vorzugsweise senkrecht zu der Umfangsrichtung 115 einen zumindest näherungsweise U-förmigen Querschnitt auf, wobei mittels freier Enden der Federelemente 140 eine Spannung in radialer Richtung 134 erzeugbar ist und/oder erzeugt wird.

Die Federelemente 140 erhöhen vorzugsweise einen Anpressdruck des Dichtelements 122, insbesondere der Dichtlippenabschnitte 132, an das bewegliche Bauteil 118.

Für eine verbesserte Festlegung des Dichtelements 122 an dem Trägerelement 106 kann es vorteilhaft sein, wenn das Dichtelement 122 an eine radial innenliegende Anlagefläche 144 des Trägerelements 106 angespritzt ist und/oder wird.

Die radial innenliegende Anlagefläche 144 ist insbesondere eine radial innere Fläche des hohlzylinderförmigen Dichtelementaufnahmeabschnitts 108.

Dabei kann es günstig sein, wenn ein axialer Endabschnitt 146 des Trägerelements 106 von dem Dichtelement 122 abgedeckt ist und/oder wird. Das Dichtelement 122 ist beispielsweise über den axialen Endabschnitt 146 des Trägerelements 106 herübergezogen und/oder umgibt das Trägerelement 106 stirnseitig.

So ist vorzugsweise ein axialer Endabschnitt 148 der Dichtungsanordnung 100 bezüglich der radialen Richtung 114 von dem Dichtelement 122 gebildet. Durch das Anspritzen des Dichtelements 122 und/oder Einspritzen des Dichtelements 122 an und/oder in das Trägerelement 106 ist die Dichtungsanordnung 100 vorzugsweise derart bereitstellbar, dass die Dichtungsanordnung 100 als Ganzes montagebereit ist.

Die Dichtungsanordnung 100 ist somit insbesondere in einem Arbeitsschritt an einem Gehäuse der Hochdruckpumpe anbringbar und in dem Gehäuse festlegbar.

Für eine verbesserte Verbindung zwischen dem Dichtelement 122 und dem Trägerelement 106, insbesondere der radial innenliegenden Anlagefläche 144 des Trägerelements 106, kann es günstig sein, wenn vor dem Aufbringen und/oder Anbringen des Dichtelements 122 eine Oberflächenbehandlung, insbesondere eine Oberflächenstrukturierung, an dem Trägerelement 106 vorgenommen wird.

Vorzugsweise wird eine Oberfläche, beispielsweise die radial innenliegende Anlagefläche 144, des Trägerelements 106 vollständig oder bereichsweise laserstrukturiert.

Vorzugsweise wird eine Riffelung, insbesondere eine periodische Riffelung, an der Oberfläche des Trägerelements 106 ausgebildet.

Dies kann eine Anhaftung des Dichtelements 122 an dem Trägerelement 106 verbessern.

Ergänzend oder alternativ kann vorgesehen sein, dass eine dem zweiten Aufnahmeraum 104 zugewandte Oberfläche des Querabschnitts 124 laserstrukturiert ist und/oder wird. Diese Oberfläche ist insbesondere einer Bearbeitung mit einem Laser einfach zugänglich.

Eine Laserstrukturierung des Querabschnitts 124 kann eine Hinterwanderung durch eine Flüssigkeit erschweren oder verhindern.

Eine Ausbildung einer Oberflächenstrukturierung, welche regelmäßig angeordnete Strukturen aufweist, ist besonders vorteilhaft.

Beispielsweise weist der Querabschnitt 124 mehrere ringförmige, insbesondere koaxial angeordnete, Vertiefungen auf, welche mittels Laserstrukturierung erzeugt sind und/oder werden. Die Ringform der Vertiefungen ist vorzugsweise geschlossen.

Es kann günstig sein, wenn die Vertiefungen eine durchschnittliche Tiefe von ca. 100 µm bis ca. 500 µm, insbesondere von ca. 100 µm bis ca. 300 µm, aufweisen. Die Tiefe ist vorzugsweise senkrecht zu einer jeweiligen Oberfläche des Querabschnitts 124 definiert.

Vorteilhaft kann es sein, wenn eine durchschnittliche Breite der Vertiefungen in einem Bereich von ca. 100 µm bis ca. 500 µm liegt. Die Breite ist vorzugsweise parallel zu einer jeweiligen Oberfläche des Querabschnitts 124 definiert.

Vorzugsweise entspricht ein Abstand zweier benachbarter Vertiefungen zumindest näherungsweise einmal bis zweimal deren Tiefe.

Das Material des Dichtelements 122 dringt vorzugsweise während des Spritzgussverfahrens zur Festlegung des Dichtelements 122 an dem Trägerelement 106 in die, insbesondere mittels Laserstrukturierung erzeugten, Strukturen ein und/oder bedeckt diese.

Vorteilhaft kann es sein, wenn das Dichtelement 122 die Strukturen bedeckt und/oder ausfüllt.

Günstig kann es sein, wenn das Dichtelement 122 nach der Oberflächenbehandlung in einem Spritzgussverfahren an dem Trägerelement 106 festgelegt wird.

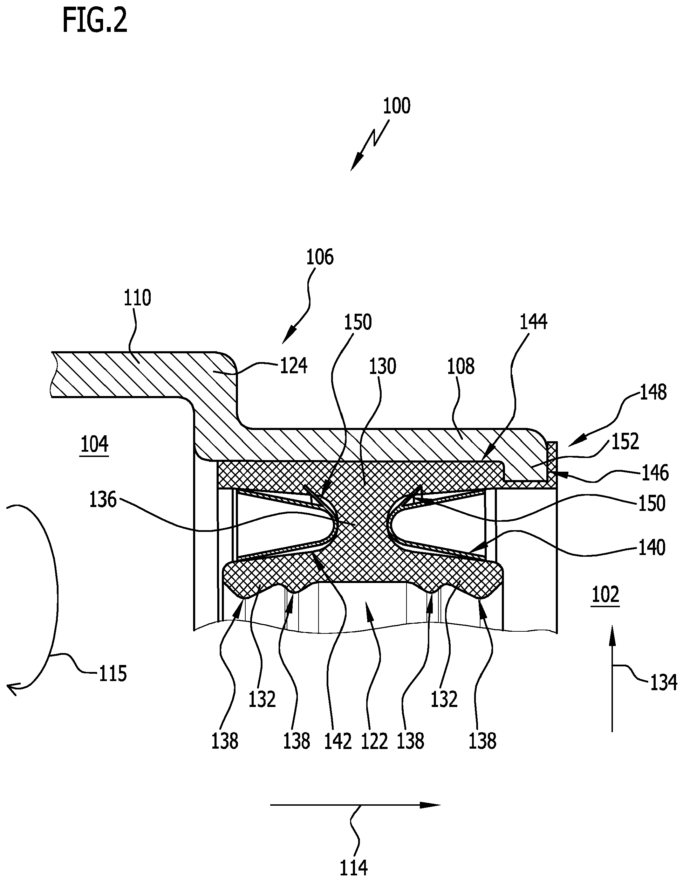

Eine in Fig. 2 dargestellte zweite Ausführungsform einer Dichtungsanordnung 100 unterscheidet sich hinsichtlich Aufbau und Funktion im Wesentlichen dadurch von der in Fig. 1 dargestellten ersten Ausführungsform, dass die Federelemente 140 jeweils ein Halteelement 150 aufweisen, welche sich bezüglich der axialen Richtung 134 an einer Außenseite der Federelemente 140 befindet und welches in und/oder an den Grundkörper 130 des Dichtelements 122 angreift und/oder eingreift.

Das Halteelement 150 dient vorzugsweise einer Sicherung des jeweiligen Federelements 140 in der Federelementaufnahme 142. Dabei kann vorgesehen sein, dass das Halteelement 150 an einer radial inneren Fläche des Grundkörpers 130 des Dichtelements 122 anliegt und gegen diese gedrückt ist und/oder wird.

Alternativ kann vorgesehen sein, dass das Halteelement 150 in den Grundkörper 130 eingreift und/oder in den Grundkörper 130 eingebettet ist. Eine Einbettung kann bereits während einer Herstellung des Dichtelements 122 erfolgen.

Es kann vorgesehen sein, dass ein oder mehrere Federelemente 140 mehrere Halteelemente 150 aufweisen, welche an Schenkeln des jeweiligen Federelements 140 angeordnet sind (nicht gezeigt).

Die Federelemente 140, welche Halteelemente 150 aufweisen, können alternativ zu der dargestellten zweiten Ausführungsform auch in der in Fig. 1 dargestellten ersten Ausführungsform der Dichtungsanordnung oder in im Folgenden beschriebenen weiteren Ausführungsformen von Dichtungsanordnungen 100 verwendet werden.

Vorliegend (Fig. 2) ist kein axialer Vorsprung 128 in dem Dichtelement 122 und/oder kein axialer Rücksprung 126 in dem Trägerelement 106 vorgesehen.

Das Dichtelement 122 liegt vorliegend ausschließlich an dem Dichtelementaufnahmeabschnitt 108 und/oder nicht an dem Querabschnitt 124 des Trägerelements 106 an.

Eine Festlegung des Dichtelements 122 relativ zu dem Trägerelement 106 ist vorzugsweise durch eine stirnseitige Überdeckung des axialen Endabschnitts 146 des Trägerelements 106 durch das Dichtelement 122 ausgebildet.

Günstig kann es sein, wenn das Trägerelement 106 im Bereich des axialen Endabschnitts 146 einen bezüglich der axialen Richtung 114 nach innen weisenden Rand 152 aufweist. Um diesen Rand 152 wird das Dichtelement 122 bei der Herstellung der Dichtungsanordnung 100 vorzugsweise herumgespritzt.

Vorzugsweise weisen die Dichtlippenabschnitte 132 jeweils zwei Dichtlippen 138 auf, wobei zwischen den an axialen Enden der Dichtlippenabschnitte 132 befindlichen Dichtlippen 138 zwei weitere Dichtlippen 138 angeordnet sind. Die weiteren Dichtlippen 138 können eine dynamische Abdichtung zwischen dem Dichtelement 122 und dem beweglichen Bauteil 118 weiter erhöhen.

Der Querabschnitt 124 ist vorliegend im Wesentlichen eben ausgebildet.

Im Übrigen stimmt die in Fig. 2 dargestellte zweite Ausführungsform einer Dichtungsanordnung 100 hinsichtlich Aufbau und Funktion im Wesentlichen mit der in Fig. 1 dargestellten ersten Ausführungsform einer Dichtungsanordnung 100 überein, so dass auf deren Beschreibung insoweit Bezug genommen wird.

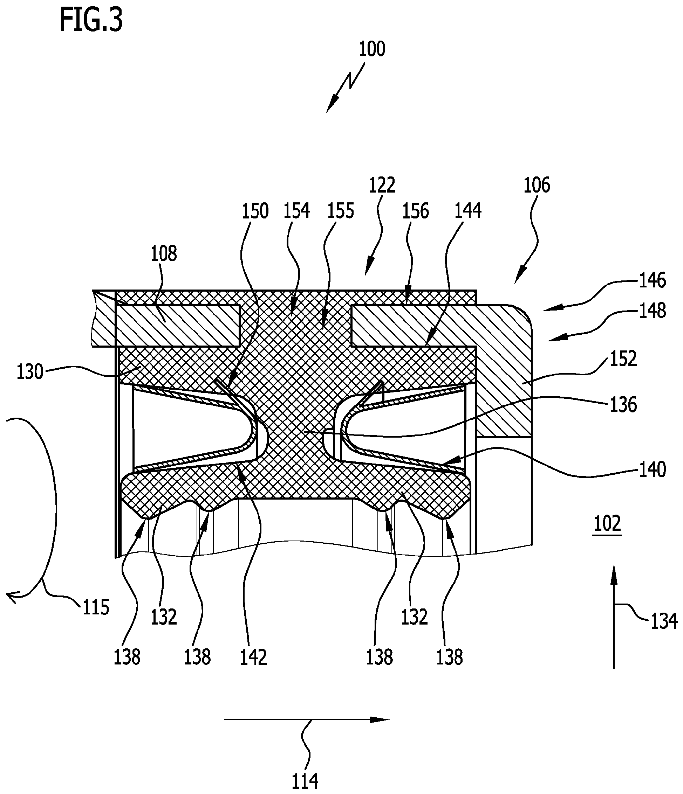

Eine in Fig. 3 dargestellte dritte Ausführungsform einer Dichtungsanordnung 100 unterscheidet sich hinsichtlich Aufbau und Funktion im Wesentlichen dadurch von der in Fig. 2 dargestellten zweiten Ausführungsform einer Dichtungsanordnung 100, dass in dem Trägerelement 106, insbesondere in dem Dichtelementaufnahmeabschnitt 108, eine oder mehrere radiale Öffnungen 154 vorgesehen sind. Die durch die radialen Öffnungen gebildeten Volumina sind vorliegend, insbesondere vollständig, von dem Dichtelement 122 ausgefüllt.

Beispielsweise wird das Dichtelement 122 durch die eine oder mehreren radialen Öffnungen 154 des Trägerelements 106 hindurchgespritzt.

Günstig kann es sein, wenn mehrere radiale Öffnungen 154, beispielsweise regelmäßig, in Umfangsrichtung 115 angeordnet sind. Die eine oder mehreren radialen Öffnungen 154 sind beispielsweise eine oder mehrere Bohrungen 155.

Es kann vorgesehen sein, dass eine oder mehrere radiale Öffnungen 154 aus dem Dichtelementaufnahmeabschnitt 108 ausgestanzt sind und/oder werden.

Insbesondere erstreckt sich das Dichtelement 122 an einer radial außenliegenden Anlagefläche 156 des Trägerelements 106, welche zumindest näherungsweise parallel zu der radial innenliegenden Anlagefläche 144 des Trägerelements 106 angeordnet ist.

Vorteilhaft kann es sein, wenn die radial außenliegende Anlagefläche 156 des Trägerelements 106 laserstrukturiert ist.

So weist das Trägerelement 106 vorzugsweise Bereiche auf, in welchen es in einem senkrecht zu der Umfangsrichtung 115 genommenen Querschnitt dreiseitig von dem Dichtelement 122 umgeben ist.

Günstig kann es sein, wenn sich das Dichtelement 122 bezüglich der Umfangsrichtung 115 vollständig um die radial innenliegende Anlagefläche 144 und/oder die radial außenliegende Anlagefläche 156 des Trägerelements 106 erstreckt.

Die eine oder mehreren radialen Öffnungen 154 des Trägerelements 106 weisen vorzugsweise eine runde oder eine nicht runde Form auf.

Bevorzugte Beispiele für nicht runde Formen sind eine Dreieck-Form, eine Rechteck-Form, beispielsweise eine Quadrat-Form, eine Wolkenform, eine ovale Form.

Langlochförmige Öffnungen sind besonders bevorzugt.

Es können alternativ zu einer einheitlichen Form der radialen Öffnungen 154 auch mehrere radiale Öffnungen 154 mit sich voneinander unterscheidenden Formen in dem Trägerelement 106 vorgesehen sein.

Durch die eine oder mehreren radialen Öffnungen 154 und das sich durch die eine oder mehreren radialen Öffnungen hindurch erstreckende Dichtelement 122 ist vorzugsweise ein Kraftschluss und/oder Formschluss zwischen dem Dichtelement 122 und dem Trägerelement 106 in axialer Richtung 114 ausgebildet. Eine stirnseitige Abdeckung des axialen Endabschnitts 146 des Trägerelements 106 ist vorzugsweise entbehrlich.

Dadurch, dass sich das Dichtelement 122 über die radial außenliegende Anlagefläche 156 des Trägerelements 106 und die radial innenliegende Anlagefläche 144 des Trägerelements 106 erstreckt, ist vorzugsweise ein Formschluss und/oder Kraftschluss zwischen dem Trägerelement 106 und dem Dichtelement 122 in radialer Richtung 134 ausgebildet.

Der axiale Endabschnitt 148 der Dichtungsanordnung 100 ist vorliegend von dem Trägerelement 106 gebildet.

Im Übrigen stimmt die in Fig. 3 dargestellte dritte Ausführungsform einer Dichtungsanordnung hinsichtlich Aufbau und Funktion im Wesentlichen mit der in Fig. 2 dargestellten zweiten Ausführungsform einer Dichtungsanordnung 100 überein, so dass auf deren Beschreibung insoweit Bezug genommen wird.

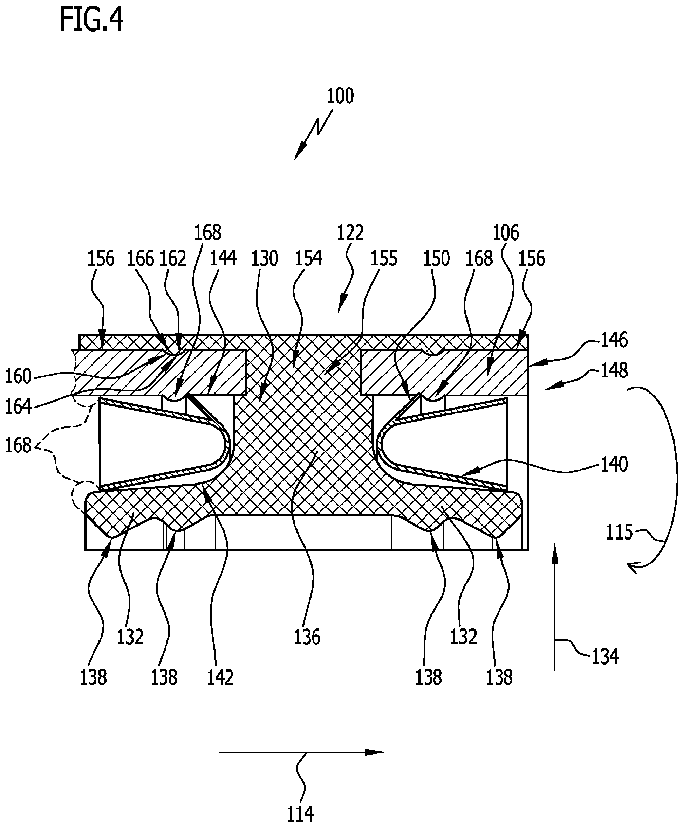

Eine in Fig. 4 dargestellte vierte Ausführungsform einer Dichtungsanordnung 100 unterscheidet sich hinsichtlich Aufbau und Funktion im Wesentlichen dadurch von der in Fig. 3 dargestellten dritten Ausführungsform einer Dichtungsanordnung 100, dass das Trägerelement 106 im Bereich der radial außenliegenden Anlagefläche 156 zwei radiale Vertiefungen 160 aufweist, an/in welchen zwei radiale Erhebungen 162 des Dichtelements 122 anliegen und/oder eingreifen.

Vorzugsweise sind die radialen Vertiefungen 160 als, beispielsweise ringförmige, sich längs der Umfangsrichtung 115 erstreckende Nuten 164 ausgebildet.

Die radialen Vertiefungen 160 weisen vorliegend eine längliche Form auf und/oder ihre Haupterstreckungsrichtung verläuft konzentrisch mit der Umfangsrichtung 115.

Alternativ zu zur Ringform geschlossenen radialen Vertiefungen 160, können die radialen Vertiefungen 160 auch, beispielsweise in Umfangsrichtung 115, Unterbrechungen aufweisen.

Die radialen Erhebungen 162 des Dichtelements 122 sind vorzugsweise, beispielsweise ringförmige, Materialverdickungen 166, welche sich in Umfangsrichtung 115 erstrecken. Beispielsweise erstrecken sich die radialen Erhebungen 162 vollständig um einen Außenumfang des Dichtelementaufnahmeabschnitts 108 des Trägerelements 106 herum.

Im Bereich der radialen Vertiefungen 160 weist das Trägerelement 106 in radialer Richtung 134 vorzugsweise jeweils eine um ca. 60 % oder weniger, insbesondere um ca. 40 % oder weniger, geringere Dicke auf als eine durchschnittliche Dicke des Trägerelements 106 in daran angrenzenden Bereichen.

Insbesondere weist das Trägerelement 106 im Bereich der radialen Vertiefungen 160 in radialer Richtung 134 jeweils eine um ca. 10 % oder mehr, insbesondere um ca. 20 % oder mehr, geringere Dicke als die durchschnittliche Dicke in daran angrenzenden Bereichen auf.

Im Bereich der radialen Erhebungen 162 weist das Dichtelement 122 längs der radialen Richtung 134 vorzugsweise jeweils eine um ca. 10 % oder mehr, insbesondere um ca. 20 % oder mehr, größere Dicke auf als eine durchschnittliche Dicke des Dichtelements 122 in daran angrenzenden Bereichen.

Insbesondere ist die Dicke des Dichtelements 122 im Bereich der radialen Erhebungen 162 in radialer Richtung 134 jeweils um ca. 60 % oder weniger, insbesondere um ca. 40 % oder weniger, größer als die durchschnittliche Dicke des Dichtelements 122 in daran angrenzenden Bereichen.

Es können auch nur eine radiale Erhebung 162 und radiale Vertiefung 160 vorgesehen sein.

Das Dichtelement 122 erstreckt sich vorliegend nicht an radial innenliegenden Anlageflächen 144 des Trägerelements 106. So kann Material gespart werden.

Halteelemente 150 der Federelemente 140 greifen vorzugsweise an radial innenliegenden Haltevorsprüngen 168 des Trägerelements 106 ein.

Jeweils ein Haltevorsprung 168 ist insbesondere in der axialen Richtung 114 auf einer Höhe mit einer radialen Vertiefung 160 des Trägerelements 106 angeordnet.

Beispielsweise hintergreifen die Halteelemente 150 der Federelemente 140 jeweils einen Haltevorsprung 168 des Trägerelements 106. Günstig kann es sein, wenn der Haltevorsprung 168 des Trägerelements 106 als radial innen verlaufende, beispielsweise ringförmige, Verdickung und/oder Ausstülpung ausgebildet ist.

Ergänzend oder alternativ kann vorgesehen sein, dass an axialen Enden der Dichtlippenabschnitte 132 ein oder mehrere Haltevorsprünge 168 ausgebildet sind, welche sich nach außen in Richtung des Trägerelements 106 erstrecken (schematisch angedeutet).

Die Federelemente 140 sind vorliegend jeweils zwischen einem Dichtlippenabschnitt 132 und dem Trägerelement 106 eingespannt und/oder auf Spannung gehalten.

Im Übrigen stimmt die in Fig. 4 dargestellte vierte Ausführungsform einer Dichtungsanordnung 100 hinsichtlich Aufbau und Funktion im Wesentlichen mit der in Fig. 3 dargestellten dritten Ausführungsform einer Dichtungsanordnung 100 überein, so dass auf deren Beschreibung insoweit Bezug genommen wird.

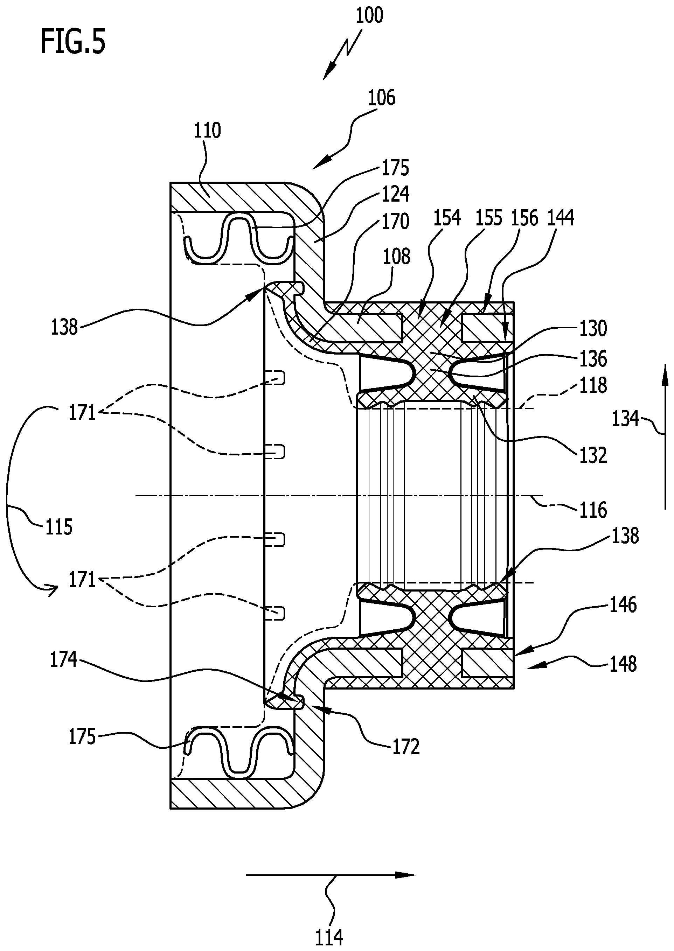

Eine in Fig. 5 dargestellte fünfte Ausführungsform einer Dichtungsanordnung 100 unterscheidet sich hinsichtlich Aufbau und Funktion im Wesentlichen dadurch von der in Fig. 3 dargestellten dritten Ausführungsform einer Dichtungsanordnung 100, dass das Dichtelement 122 einen Kragenabschnitt 170 aufweist, welcher sich an einer von dem axialen Endabschnitt 146 des Trägerelements 106 abgewandten Ende des Dichtelements 122 an den Grundkörper 130 des Dichtelements 122 anschließt.

Der Kragenabschnitt 170 umgreift vorzugsweise einen Übergangsabschnitt zwischen dem Dichtelementaufnahmeabschnitt 108 und dem Querabschnitt 124 des Trägerelements 106.

An einem von dem axialen Endabschnitt 146 des Trägerelements 106 abgewandten Ende weist der Kragenabschnitt 170 vorzugsweise eine Dichtlippe 138 auf, welche insbesondere einer Abdichtung des zweiten Aufnahmeraums 104 dient.

Die Dichtlippe 138 des Kragenabschnitts 170 ist vorzugsweise ringförmig ausgebildet. Vorzugsweise bildet die Dichtlippe 138 des Kragenabschnitts 170 eine statische Dichtlippe, welche einer statischen Abdichtung dient.

Es kann vorgesehen sein, dass die Dichtlippe 138 des Kragenabschnitts 170 mittels einer Federvorrichtung 175, beispielsweise einer Spiralfeder oder einer Art Tellerfeder oder einer Balgfeder, vorgespannt ist (schematisch angedeutet). Die Dichtlippe 138 des Kragenabschnitts 170 ist und/oder wird vorzugsweise mittels der Federvorrichtung 175 an das Trägerelement 106 angepresst.

Dabei ist die Federvorrichtung 175 vorzugsweise zwischen einer Flanke des beweglichen Bauteils 118 und einer Innenseite des Querabschnitts 124 des Trägerelements 106 auf Spannung gehalten und/oder komprimiert.

Der Kragenabschnitt 170 erweitert sich vorzugsweise entgegen der axialen Richtung 114.

Günstig kann es sein, wenn der Kragenabschnitt 170 eine oder mehrere Entlastungsnuten 171 aufweist, welche insbesondere längs der Umfangsrichtung 115, beispielsweise regelmäßig, angeordnet sind (schematisch angedeutet). Die eine oder mehreren Entlastungsnuten 171 gleichen vorzugsweise Spannungen in Umfangsrichtung 115 aus.

Es kann vorgesehen sein, dass der Querabschnitt 124 eine, beispielsweise ringförmig ausgebildete, axiale Vertiefung 172 aufweist. Im Bereich der axialen Vertiefung 172, welche beispielsweise als Nut ausgebildet ist, weist der Querabschnitt 124 vorzugsweise eine im Vergleich zu benachbart angeordneten Bereichen lokal reduzierte Dicke in axialer Richtung 114 auf.

Im Bereich der axialen Vertiefung 172 ist eine Dicke des Trägerelements 106 vorzugsweise um ca. 10 % oder mehr, insbesondere um ca. 20 % oder mehr, geringer als eine durchschnittliche Dicke des Trägerelements 106 in daran angrenzenden Bereichen.

Im Bereich der axialen Vertiefung 172 ist die Dicke des Trägerelements 106 vorzugsweise um ca. 60 % oder weniger, beispielsweise um ca. 40 % oder weniger, geringer als die durchschnittliche Dicke des Trägerelements 106 in daran angrenzenden Bereichen.

Vorteilhaft kann es sein, wenn das Dichtelement 122 in die axiale Vertiefung 172 des Trägerelements 106 eingreift und/oder eingespritzt ist und/oder wird.

Hierzu/hierdurch weist das Dichtelement 122, beispielsweise der Kragenabschnitt 170, vorliegend eine axiale Erhebung 174 auf, welche in die axiale Vertiefung 172 eingreift und/oder an der axialen Vertiefung 172 anliegt. Die axiale Erhebung 174 hintergreift das Trägerelement 106 insbesondere in radialer Richtung 134.

Das Dichtelement 122 weist im Bereich der axialen Erhebung 174 vorzugsweise eine lokal erhöhte Dicke im Vergleich zu einer durchschnittlichen Dicke des Dichtelements 122 auf.

Im Bereich der axialen Erhebung 174 ist die Dicke des Dichtelements 122 vorzugsweise um ca. 10 % oder mehr, insbesondere um ca. 20 % oder mehr, größer als eine durchschnittliche Dicke des Dichtelements 122 in daran angrenzenden Bereichen.

Die Dicke des Dichtelements 122 ist im Bereich der axialen Erhebung 174 vorzugsweise um ca. 60 % oder weniger, insbesondere ca. 40 % oder weniger, größer als die durchschnittliche Dicke des Dichtelements 122 in daran angrenzenden Bereichen.

Vorzugsweise ist die axiale Erhebung 174 als, beispielsweise ringförmige, Materialverdickung in dem Dichtelement 122 ausgebildet.

Die Federelemente 140 gemäß der fünften Ausführungsform der Dichtungsanordnung 100 sind vorliegend ohne Halteelemente 150 ausgebildet. Alternativ können die Federelemente 140 auch Halteelemente 150 aufweisen, beispielsweise wie im Zusammenhang mit der Fig. 4 beschrieben.

Die axiale Vertiefung 172 und die axiale Erhebung 174 bilden gemeinsam vorzugsweise einen Formschluss und/oder Kraftschluss zwischen dem Dichtelement 122 und dem Trägerelement 106 in radialer Richtung 134 und/oder axialer Richtung 114.

Das Trägerelement 106 weist vorliegend keinen abgewinkelten Rand 152 auf.

Im Übrigen stimmt die in Fig. 5 dargestellte fünfte Ausführungsform einer Dichtungsanordnung 100 hinsichtlich Aufbau und Funktion im Wesentlichen mit der in Fig. 3 dargestellten dritten Ausführungsform einer Dichtungsanordnung 100 überein, so dass auf deren Beschreibung insoweit Bezug genommen wird.

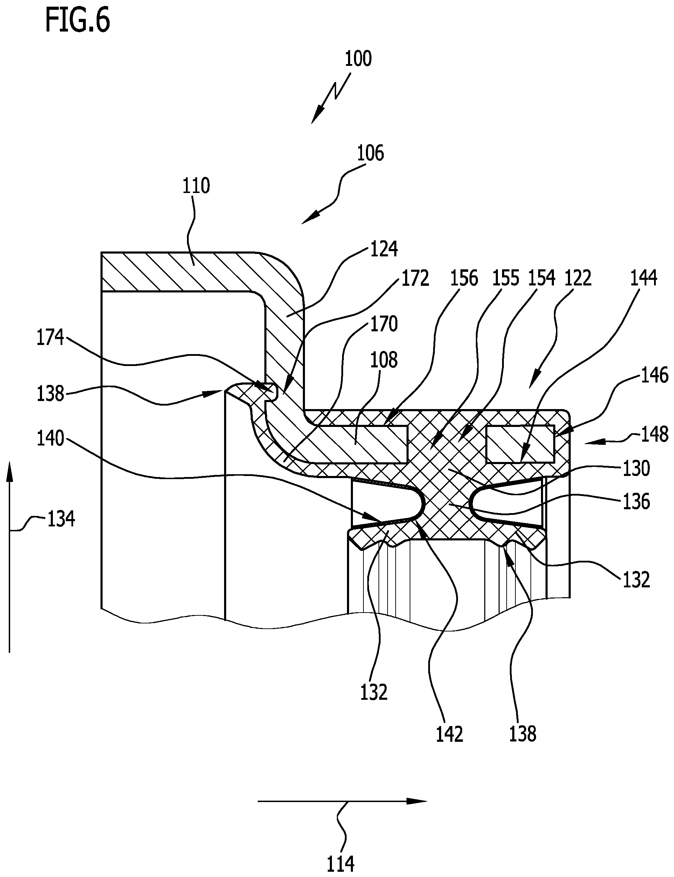

Eine in Fig. 6 dargestellte sechste Ausführungsform einer Dichtungsanordnung 100 unterscheidet sich hinsichtlich Aufbau und Funktion im Wesentlichen dadurch von der in Fig. 5 dargestellten fünften Ausführungsform einer Dichtungsanordnung 100, dass der axiale Endabschnitt 146 des Trägerelements 106 von dem Dichtelement 122 umschlossen ist.

Vorteilhaft kann es sein, wenn das Trägerelement 106 in zu dem axialen Endabschnitt 148 der Dichtungsanordnung 100 hin gewandten Bereich in einem senkrecht zu der Umfangsrichtung 115 genommenen Querschnitt teilweise vierseitig und/oder vollständig von dem Dichtelement 122 umschlossen ist.

Das Dichtelement 122 wird vorzugsweise im Bereich der radialen Öffnungen 154 vollständig um das Trägerelement 106 herumgespritzt.

In der in Fig. 6 dargestellten sechsten Ausführungsform sind keine Entlastungsnuten 171 in der Dichtlippe 138 des Kragenelements 170 vorgesehen.

Im Übrigen stimmt die in Fig. 6 dargestellte sechste Ausführungsform einer Dichtungsanordnung 100 hinsichtlich Aufbau und Funktion im Wesentlichen mit der in Fig. 5 dargestellten fünften Ausführungsform einer Dichtungsanordnung 100 überein, so dass auf deren Beschreibung insoweit Bezug genommen wird.

Durch das Anspritzen des Dichtelements 122 an das Trägerelement 106 kann vorzugsweise ein Formschluss und/oder Kraftschluss in radialer Richtung 134 sowie in axialer Richtung 114 ausgebildet werden.

Durch die Umspritzung des Trägerelements 106 mit dem Dichtelement 122 ist insbesondere eine Labyrinth-artige Verbindung des Trägerelements 106 und des Dichtelements 122 ausgebildet.

## Patentansprüche

1. Dichtungsanordnung (100) zur Abdichtung zwischen zwei Aufnahmeräumen (102, 104) zur Aufnahme zweier Medien im Bereich eines beweglichen Bauteils (118), welches längs einer Längsmittelachse (116) des beweglichen Bauteils (118) verschiebbar und/oder um die Längsmittelachse (116) drehbar ist, wobei die Dichtungsanordnung (100) Folgendes umfasst:
- ein Trägerelement (106); und
- ein ringförmiges an dem Trägerelement (106) angeordnetes Dichtelement (122), welches in montiertem Zustand zur Abdichtung an dem beweglichen Bauteil (118) anliegt,
wobei das Dichtelement (122) in einem Spritzgussverfahren an dem Trägerelement (106) festgelegt ist,
**dadurch gekennzeichnet, dass**
ein hohlzylinderförmiger Dichtelementaufnahmeabschnitt (108) des Trägerelements (106) eine oder mehrere radiale Öffnungen (154) aufweist, welche von dem Dichtelement (122) gefüllt sind.

2. Dichtungsanordnung (100) nach Anspruch 1, **dadurch gekennzeichnet**, a) dass das Dichtelement (122) einen axialen Endabschnitt (146) des Trägerelements (106), welcher einem ersten Aufnahmeraum (102) der zwei Aufnahmeräume (102, 104) zugewandt ist, in axialer Richtung (114) umgibt; und/oder
b) dass das Dichtelement (122) eine radial außenliegende Anlagefläche (156) und/der eine radial innenliegende Anlagefläche (144) des Trägerelements (106) umgibt, insbesondere daran angespritzt ist.

3. Dichtungsanordnung (100) nach einem der Ansprüche 1 oder 2, **dadurch gekennzeichnet, dass** das Dichtelement (122) durch die eine oder mehreren radialen Öffnungen (154) hindurchgespritzt ist.

4. Dichtungsanordnung (100) nach einem der Ansprüche 1 bis 3, **dadurch gekennzeichnet,**
a) **dass** das Trägerelement (106) die eine oder mehrere radiale Öffnungen (154) aufweist, wobei die eine oder die mehreren radialen Öffnungen (154) Bohrung(en) (155) sind; und/oder
b) **dass** das Trägerelement (106) die eine oder mehrere radiale Öffnungen (154) aufweist, welche eine runde Form oder eine nicht runde Form, insbesondere eine ovale Form, eine Dreieck-Form, eine Wolkenform und/oder eine Rechteck-Form, aufweisen; und/oder
c) **dass** das Trägerelement (106) die eine oder mehrere radiale Öffnungen (154) aufweist, wobei das Trägerelement (106) in axialer Richtung (114) bezüglich der Längsmittelachse (116) des beweglichen Bauteils (118) zwischen der einen oder den mehreren radialen Öffnungen (154) und einem axialen Endabschnitt (148) im Wesentlichen vierseitig von dem Dichtelement (122) umgeben ist; und/oder
d) **dass** das Trägerelement (106) einen Querabschnitt (124) umfasst, dessen Haupterstreckungsebene im Wesentlichen quer, insbesondere senkrecht, zu der Längsmittelachse (116) des beweglichen Bauteils (118) angeordnet ist, wobei der Querabschnitt (124) eine oder mehrere axiale Vertiefungen (172) aufweist, in welchen der Querabschnitt (124) eine lokal reduzierte Dicke und/oder einen axialen Rücksprung in axialer Richtung (114) bezüglich der Längsmittelachse (116) des beweglichen Bauteils (118) aufweist, und/oder dass das Dichtelement (122) eine oder mehrere axiale Erhebungen (174) aufweist, in welchen das Dichtelement (122) in axialer Richtung (114) bezüglich der Längsmittelachse (116) des beweglichen Bauteils (118) eine lokal erhöhte Dicke und/oder einen axialen Vorsprung (128) aufweist, wobei die eine oder mehreren axialen Erhebungen (174) insbesondere in den einen oder mehreren axialen Vertiefungen (172) aufgenommen sind und/oder darin eingreifen.

5. Dichtungsanordnung (100) nach einem der Ansprüche 1 bis 4, **dadurch gekennzeichnet, dass** das Dichtelement (122) an einer einem zweiten Aufnahmeraum (104) zugewandten Seite einen Kragenabschnitt (170) aufweist, welcher sich an einen Grundkörper (130) des Dichtelements (122) anschließt und an einem Ende eine Dichtlippe (138) aufweist, wobei insbesondere die Dichtlippe (138) in Umfangsrichtung (115) durch eine oder mehrere Entlastungsnuten (171) unterbrochen ist.

6. Dichtungsanordnung (100) nach einem der Ansprüche 1 bis 5, **dadurch gekennzeichnet, dass** das Trägerelement (106) eine oder mehrere radiale Vertiefungen (160), insbesondere eine oder mehrere, insbesondere ringförmige, Nuten (164), aufweist, an welchen eine oder mehrere, insbesondere komplementär dazu ausgebildete, radiale Erhebungen (162) des Dichtelements (122) anliegen und/oder eingreifen.

7. Dichtungsanordnung (100) nach einem der Ansprüche 1 bis 6, **dadurch gekennzeichnet, dass** eine bezüglich der Längsmittelachse (116) des beweglichen Bauteils (118) radial innenliegende Anlagefläche (144) des Trägerelements (106) und/oder eine bezüglich der Längsmittelachse (116) des beweglichen Bauteils (118) radial außenliegende Anlagefläche (156) des Trägerelements (106) eine Oberflächenstrukturierung aufweisen und/oder laserstrukturiert sind.

8. Dichtungsanordnung (100) nach einem der Ansprüche 1 bis 7, **dadurch gekennzeichnet, dass** das Trägerelement (106) an dessen Querabschnitt (124) auf einer einem zweiten Aufnahmeraum (104) zugewandten Seite eine mittels Laserstrukturierung erzeugte Oberflächenstrukturierung aufweist, wobei die Oberflächenstrukturierung insbesondere regelmäßig angeordnete, insbesondere ringförmige, Strukturen umfasst, welche von dem Dichtelement (122) bedeckt und/oder ausgefüllt sind.

9. Dichtungsanordnung (100) nach einem der Ansprüche 1 bis 8, **dadurch gekennzeichnet, dass** das Dichtelement (122) mittels eines oder mehrerer Federelemente (140) in radialer Richtung (134) bezüglich der Längsmittelachse (116) des beweglichen Bauteils (118) vorspannbar ist, wobei das eine oder die mehreren Federelemente (140) zwischen einem oder mehreren Dichtlippenabschnitten (132) und einem Grundkörper (130) des Dichtelements (122) oder einer radial innenliegenden Anlagefläche (144) des Trägerelements (106) eingespannt sind.

10. Dichtungsanordnung (100) nach einem der Ansprüche 1 bis 9, **dadurch gekennzeichnet, dass** ein oder mehrere Federelemente (140) der Dichtungsanordnung (100) an einer in montiertem Zustand von dem beweglichen Bauteil (118) abgewandten Seite mindestens ein, insbesondere hakenförmiges, Halteelement (150) aufweisen, welches in mindestens einen Haltevorsprung (168) in dem Dichtelement (122) oder dem Trägerelement (106) eingreift und/oder den mindestens einen Haltevorsprung (168) hintergreift.

11. Dichtungsanordnung (100) nach einem der Ansprüche 1 bis 10, **dadurch gekennzeichnet, dass** das Dichtelement (122) in axialer Richtung (114) und in mindestens einer radialen Richtung (134) bezüglich der Längsmittelachse (116) des beweglichen Bauteils (118) formschlüssig und/oder kraftschlüssig und/oder stoffschlüssig mit dem Trägerelement (106) verbunden ist.

12. Verwendung einer Dichtungsanordnung (100) nach einem der Ansprüche 1 bis **11** als Stangendichtung, Kolbendichtung und/oder Wellendichtung, insbesondere in einer Kraftstoffpumpe und/oder einer Kolbenpumpe.

13. Hochdruckpumpe, umfassend mindestens eine Dichtungsanordnung (100) nach einem der Ansprüche 1 bis 11.

14. Verfahren zur Herstellung einer Dichtungsanordnung (100) nach einem der Ansprüche 1 bis 11, wobei das Verfahren Folgendes umfasst:
- Festlegen des ringförmigen Dichtelements (122) an dem Trägerelement (106) in einem Spritzgussverfahren.

15. Verfahren nach Anspruch 14, **dadurch gekennzeichnet, dass** eine bezüglich der Längsmittelachse (116) des beweglichen Bauteils (118) radial innenliegende Anlagefläche (144) des Trägerelements (106) und/oder eine bezüglich der Längsmittelachse (116) des beweglichen Bauteils (118) radial außenliegende Anlagefläche (156) des Trägerelements (106) mit einem Laser strukturiert wird, bevor das Dichtelement (122) festgelegt, insbesondere angespritzt, wird.

## Claims

1. Sealing arrangement (100) for sealing between two receiving spaces (102, 104) for receiving two media in the region of a movable component (118), which movable component is displaceable along a longitudinal central axis (116) of the movable component (118) and/or rotatable about the longitudinal central axis (116), the sealing arrangement (100) comprising the following:
- a carrier element (106); and
- an annular sealing element (122) which is arranged on the carrier element (106) and in the fitted state, for sealing purposes, abuts against the movable component (118),
wherein the sealing element (122) is fixed to the carrier element (106) in an injection-moulding process,
**characterized in that**
a hollow-cylindrical sealing-element-receiving section (108) of the carrier element (106) has one or more radial openings (154) which are filled by the sealing element (122).

2. Sealing arrangement (100) according to Claim 1, characterized a) in that the sealing element (122) surrounds an axial end section (146) of the carrier element (106) in an axial direction (114), which axial end section is directed towards a first receiving space (102) of the two receiving spaces (102, 104); and/or
b) in that the sealing element (122) surrounds a radially outer abutment surface (156) and/or a radially inner abutment surface (144) of the carrier element (106), in particular is moulded onto them/it.

3. Sealing arrangement (100) according to either of Claims 1 and 2, **characterized in that** the sealing element (122) is moulded through the one or more radial openings (154).

4. Sealing arrangement (100) according to one of Claims 1 to 3, **characterized**
a) **in that** the carrier element (106) has the one or more radial openings (154), wherein the one or more radial openings (154) are bores (155); and/or
b) **in that** the carrier element (106) has the one or more radial openings (154), these having a round shape or a non-round shape, in particular an oval shape, a triangular shape, a cloud shape and/or a rectangular shape; and/or
c) **in that** the carrier element (106) has the one or more radial openings (154), wherein the carrier element (106), in an axial direction (114) in relation to the longitudinal central axis (116) of the movable component (118), is surrounded by the sealing element (122) substantially on four sides between the one or more radial openings (154) and an axial end section (148); and/or
d) **in that** the carrier element (106) comprises a transverse section (124) whose main extent plane is oriented substantially transversely, in particular perpendicularly, to the longitudinal central axis (116) of the movable component (118), wherein the transverse section (124) has one or more axial depressions (172) in which the transverse section (124) has a locally reduced thickness and/or an axially recessed portion in the axial direction (114) in relation to the longitudinal central axis (116) of the movable component (118), and/or in that the sealing element (122) has one or more axial elevations (174) in which the sealing element (122) has a locally increased thickness and/or an axial projection (128) in the axial direction (114) in relation to the longitudinal central axis (116) of the movable component (118), wherein the one or more axial elevations (174), in particular, are received in the one or more axial depressions (172) and/or engage into the latter.

5. Sealing arrangement (100) according to one of Claims 1 to 4, **characterized in that** the sealing element (122), on a side directed towards a second receiving space (104), has a collar section (170) which adjoins a main body (130) of the sealing element (122) and which has a sealing lip (138) at one end, wherein in particular the sealing lip (138) is interrupted by one or more relief grooves (171) in a circumferential direction (115).

6. Sealing arrangement (100) according to one of Claims 1 to 5, **characterized in that** the carrier element (106) has one or more radial depressions (160), in particular one or more, in particular annular, grooves (164), against which one or more, in particular complementarily formed, radial elevations (162) of the sealing element (122) abut and/or engage.

7. Sealing arrangement (100) according to one of Claims 1 to 6, **characterized in that** a radially inner abutment surface (144) of the carrier element (106) in relation to the longitudinal central axis (116) of the movable component (118) and/or a radially outer abutment surface (156) of the carrier element (106) in relation to the longitudinal central axis (116) of the movable component (118) have/has a surface structuring and/or are/is laser-structured.

8. Sealing arrangement (100) according to one of Claims 1 to 7, **characterized in that** the carrier element (106), on its transverse section (124), has on a side directed towards a second receiving space (104) a surface structuring generated by means of laser structuring, wherein the surface structuring comprises in particular regularly arranged, in particular annular, structures which are covered and/or filled by the sealing element (122).

9. Sealing arrangement (100) according to one of Claims 1 to 8, **characterized in that** the sealing element (122) is preloadable in a radial direction (134) in relation to the longitudinal central axis (116) of the movable component (118) by means of one or more spring elements (140), wherein the one or more spring elements (140) are clamped between one or more sealing-lip sections (132) and a main body (130) of the sealing element (122) or a radially inner abutment surface (144) of the carrier element (106).

10. Sealing arrangement (100) according to one of Claims 1 to 9, **characterized in that** one or more spring elements (140) of the sealing arrangement (100), on a side directed away from the movable component (118) in the fitted state, have at least one, in particular hook-shaped, holding element (150) which engages into at least one holding projection (168) in the sealing element (122) or carrier element (106) and/or which engages behind the at least one holding projection (168).

11. Sealing arrangement (100) according to one of Claims 1 to 10, **characterized in that** the sealing element (122) is connected in a form-fitting and/or force-fitting and/or materially bonded manner to the carrier element (106) in the axial direction (114) and in at least one radial direction (134) in relation to the longitudinal central axis (116) of the movable component (118).

12. Use of a sealing arrangement (100) according to one of Claims 1 to 11 as a rod seal, piston seal and/or shaft seal, in particular in a fuel pump and/or a piston pump.

13. High-pressure pump comprising at least one sealing arrangement (100) according to one of Claims 1 to 11.

14. Method for producing a sealing arrangement (100) according to one of Claims 1 to 11, wherein the method comprises the following:
- fixing the annular sealing element (122) to the carrier element (106) in an injection-moulding process.

15. Method according to Claim 14, **characterized in that** a radially inner abutment surface (144) of the carrier element (106) in relation to the longitudinal central axis (116) of the movable component (118) and/or a radially outer abutment surface (156) of the carrier element (106) in relation to the longitudinal central axis (116) of the movable component (118) are/is structured using a laser before the sealing element (122) is fixed, in particular moulded on.

## Revendications

1. Ensemble d'étanchéité (100) destiné à assurer l'étanchéité entre deux espaces de réception (102, 104) destinés à recevoir deux milieux dans la zone d'un composant mobile (118), qui peut être coulissé le long d'un axe médian longitudinal (116) du composant mobile (118) et/ou peut être tourné autour de l'axe médian longitudinal (116), l'ensemble d'étanchéité (100) comprenant les éléments suivants :
- un élément porteur (106) ; et
- un élément d'étanchéité annulaire (122) disposé sur l'élément porteur (106), lequel repose, dans l'état monté, sur le composant mobile (118) pour assurer l'étanchéité,
l'élément d'étanchéité (122) étant fixé sur l'élément porteur (106) dans un procédé de moulage par injection,
**caractérisé en ce que**
une section de réception (108) d'élément d'étanchéité cylindrique creuse de l'élément porteur (106) comporte une ou plusieurs ouvertures radiales (154), qui sont remplies par l'élément d'étanchéité (122).

2. Ensemble d'étanchéité (100) selon la revendication 1, caractérisé en ce a) que l'élément d'étanchéité (122) entoure dans la direction axiale (114) une section d'extrémité axiale (146) de l'élément porteur (106), qui est tournée vers un premier espace de réception (102) des deux espaces de réception (102, 104) ; et/ou b) que l'élément d'étanchéité (122) entoure une surface d'appui radialement extérieure (156) et/ou une surface d'appui radialement intérieure (144) de l'élément porteur (106), en particulier est moulé par injection sur celles-ci.

3. Ensemble d'étanchéité (100) selon l'une des revendications 1 ou 2, **caractérisé en ce que** l'élément d'étanchéité (122) est moulé par injection à travers l'ouverture radiale ou plusieurs ouvertures radiales (154).

4. Ensemble d'étanchéité (100) selon l'une des revendications 1 à 3, **caractérisé en ce**
a) **que** l'élément porteur (106) comporte l'ouverture radiale ou plusieurs ouvertures radiales (154), l'ouverture radiale ou les plusieurs ouvertures radiales (154) étant des alésages (155) ; et/ou
b) **que** l'élément porteur (106) comporte une ou plusieurs ouvertures radiales (154), qui comportent une forme ronde ou une forme non ronde, en particulier une forme ovale, une forme triangulaire, une forme en nuage et/ou une forme rectangulaire ; et/ou
c) **que** l'élément porteur (106) comporte une ou plusieurs ouvertures radiales (154), l'élément porteur (106) étant entouré par l'élément d'étanchéité (122) sensiblement sur quatre côtés dans la direction axiale (114) par rapport à l'axe médian longitudinal (116) du composant mobile (118) entre l'ouverture radiale ou les plusieurs ouvertures radiales (154) et une section d'extrémité axiale (148) ; et/ou
d) **que** l'élément porteur (106) comprend une section transversale (124) dont le plan d'extension principal est disposé sensiblement transversalement, en particulier perpendiculairement, à l'axe médian longitudinal (116) du composant mobile (118), la section transversale (124) comportant un ou plusieurs renfoncements axiaux (172), dans lesquels la section transversale (124) comporte une épaisseur localement réduite et/ou un retrait axial dans la direction axiale (114) par rapport à l'axe médian longitudinal (116) du composant mobile (118), et/ou que l'élément d'étanchéité (122) comporte une ou plusieurs parties surélevées axiales (174), dans lesquelles l'élément d'étanchéité (122) comporte une épaisseur localement augmentée et/ou une partie faisant saillie axiale (128) dans la direction axiale (114) par rapport à l'axe médian longitudinal (116) du composant mobile (118), les une ou plusieurs parties surélevées axiales (174) étant reçues dans les un ou plusieurs renfoncements axiaux (172) et/ou venant en prise avec ceux-ci.

5. Ensemble d'étanchéité (100) selon l'une des revendications 1 à 4, **caractérisé en ce que** l'élément d'étanchéité (122) comporte, sur un côté tourné vers un deuxième espace de réception (104), une section de collerette (170), qui se raccorde à un corps principal (130) de l'élément d'étanchéité (122) et qui comporte, sur une extrémité, une lèvre d'étanchéité (138), la lèvre d'étanchéité (138) étant en particulier interrompue dans la direction périphérique (115) par une ou plusieurs rainures de décharge (171).

6. Ensemble d'étanchéité (100) selon l'une des revendications 1 à 5, **caractérisé en ce que** l'élément porteur (106) comporte un ou plusieurs renfoncements radiaux (160), en particulier une ou plusieurs rainures (164), en particulier annulaires, sur lesquels reposent et/ou avec lesquels viennent en prise une ou plusieurs parties surélevées radiales (162), réalisées en particulier de manière complémentaire, de l'élément d'étanchéité (122).

7. Ensemble d'étanchéité (100) selon l'une des revendications 1 à 6, **caractérisé en ce qu'**une surface d'appui radialement intérieure (144) de l'élément porteur (106) par rapport à l'axe médian longitudinal (116) du composant mobile (118) et/ou une surface d'appui radialement extérieure (156) de l'élément porteur (106) par rapport à l'axe médian longitudinal (116) du composant mobile (118) comportent une structuration de surface et/ou sont structurées au laser.

8. Ensemble d'étanchéité (100) selon l'une des revendications 1 à 7, **caractérisé en ce que** l'élément porteur (106) comporte, sur un côté tourné vers un deuxième espace de réception (104), une structuration de surface produite par structuration laser sur sa section transversale (124), la structuration de surface comprenant en particulier des structures disposées régulièrement, en particulier annulaires, qui sont recouvertes et/ou remplies par l'élément d'étanchéité (122).

9. Ensemble d'étanchéité (100) selon l'une des revendications 1 à 8, **caractérisé en ce que** l'élément d'étanchéité (122) peut être précontraint dans la direction radiale (134) par rapport à l'axe médian longitudinal (116) du composant mobile (118) au moyen d'un ou de plusieurs éléments de ressort (140), l'élément de ressort ou les plusieurs éléments de ressort (140) étant enserrés entre une ou plusieurs sections de lèvre d'étanchéité (132) et un corps principal (130) de l'élément d'étanchéité (122) ou une surface d'appui radialement intérieure (144) de l'élément porteur (106).

10. Ensemble d'étanchéité (100) selon l'une des revendications 1 à 9, **caractérisé en ce qu'**un ou plusieurs éléments de ressort (140) de l'ensemble d'étanchéité (100) comportent, sur un côté opposé au composant mobile (118) dans l'état monté, au moins un élément de retenue (150), en particulier en forme de crochet, qui vient en prise avec au moins une partie faisant saillie de retenue (168) dans l'élément d'étanchéité (122) ou l'élément porteur (106) et/ou vient en prise par l'arrière avec la partie faisant saillie de retenue (168).

11. Ensemble d'étanchéité (100) selon l'une des revendications 1 à 10, **caractérisé en ce que** l'élément d'étanchéité (122) est relié à l'élément porteur (106) par complémentarité de forme et/ou à force et/ou par liaison de matière dans la direction axiale (114) et dans au moins une direction radiale (134) par rapport à l'axe médian longitudinal (116) du composant mobile (118).

12. Utilisation d'un ensemble d'étanchéité (100) selon l'une des revendications 1 à 11 comme joint d'étanchéité de tige, joint d'étanchéité de piston et/ou joint d'étanchéité d'arbre, en particulier dans une pompe à carburant et/ou une pompe à piston.

13. Pompe haute pression comprenant au moins un ensemble d'étanchéité (100) selon l'une des revendications 1 à 11.

14. Procédé de fabrication d'un ensemble d'étanchéité (100) selon l'une des revendications 1 à 11, le procédé comprenant des étapes suivantes :
- fixation de l'élément d'étanchéité annulaire (122) sur l'élément porteur (106) par un procédé de moulage par injection.

15. Procédé selon la revendication 14, **caractérisé en ce qu'**une surface d'appui radialement intérieure (144) de l'élément porteur (106) par rapport à l'axe médian longitudinal (116) du composant mobile (118) et/ou une surface d'appui radialement extérieure (156) de l'élément porteur (106) par rapport à l'axe médian longitudinal (116) du composant mobile (118) sont structurées avec un laser avant que l'élément d'étanchéité (122) ne soit fixé, en particulier ne soit moulé par injection.
